# EUROPÄISCHE PATENTSCHRIFT

(11) **EP 2 635 918 B1**
(45) Veröffentlichungstag und Bekanntmachung des Hinweises auf die Patenterteilung: **11.03.2015**
(21) Anmeldenummer: 11771194.5
(22) Anmeldetag: 21.10.2011
(51) Int. Cl.: G01S 7/481, G01S 7/486, G01S 7/487, G01S 7/483, G01S 17/42

(54) **OPTOELEKTRONISCHER SENSOR UND VERFAHREN ZUR ERFASSUNG UND ABSTANDSBESTIMMUNG VON OBJEKTEN**
OPTOELECTRONIC SENSOR AND METHOD FOR DETECTING AND DETERMINING THE DISTANCE OF OBJECTS
CAPTEUR OPTOÉLECTRONIQUE ET PROCÉDÉ DE DÉTECTION D'OBJETS ET DE DÉTERMINATION DE LEUR DISTANCE

(30) Priorität: 21.12.2010 DE 102010061382
(43) Veröffentlichungstag der Anmeldung: 11.09.2013
(73) Patentinhaber: Sick AG, 79183 Waldkirch (DE)
(72) Erfinder: HULM, Christian, 79183 Waldkirch (DE); SIGMUND, Jörg, 79100 Freiburg (DE); FEISE, Gerold, 22335 Hamburg (DE)
(74) Vertreter: Hehl, Ulrich
(86) Internationale Anmeldenummer: PCT/EP2011/068446
(87) Internationale Veröffentlichungsnummer: WO 2012/084298

(56) Entgegenhaltungen:
- EP-A1- 1 522 870
- US-A1- 2004 169 840

## Beschreibung

Die Erfindung betrifft einen Laserscanner und ein Verfahren zur Erfassung und Abstandsbestimmung von Objekten nach dem Oberbegriff von Anspruch 1 beziehungsweise 10.

Laserscanner eignen sich für Abstandsmessungen, die einen großen horizontalen Winkelbereich des Messsystems erforderlich machen. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses.

Nachteilig an einem Pulslaufzeitverfahren ist, dass in der Regel eine große Sendeleistung und ein sehr empfindlicher Empfänger zur Verfügung stehen müssen, um eine signifikante Messreichweite zu erzielen. Besonders auf der Empfängerseite erhöhen sich dabei Bauraumbedarf und Herstellkosten, etwa für eine Lawinenphotodiode einschließlich Hochspannungserzeugung. Ein phasenbasiertes Verfahren mit Modulation eines Dauerstrich- bzw. CW-Lasers wiederum birgt den Nachteil, dass es nur einen beschränkten Eindeutigkeitsbereich von typischerweise wenigen Metern bietet. Zugleich ist die optische Ausgangsleistung des Senders bei diesem Verfahren üblicherweise gering, so dass speziell bei zusätzlichen äußeren Einflüssen ein geringes Signal/Rausch-Verhältnis besteht. Das Verfahren hat eine geringe Fremdlichtfestigkeit und einen stark eingeschränkten Dynamikbereich.

Von eindimensionalen Entfernungstastern ist bekannt, die Lichtlaufzeit durch Mittelung einer Vielzahl von Einzelmessungen zu bestimmen. Ein derartiges Verfahren wird in der EP 1 522 870 A1 beschrieben. Dabei ist auch abschließend die Anwendung in einem Scanner erwähnt, und es wird auf den Zusammenhang hingewiesen, dass durch langsamere Drehbewegung, d.h. geringere Scanfrequenz, eine höhere Mittelungstiefe erreicht werden kann. Außer dieser Abschlussbemerkung sind dem Dokument aber keine Erkenntnisse zu entnehmen, wie aus Einzelmessungen eine winkelaufgelöste Abstandsmessung bestimmbar ist.

Die US 2004/0169840 A1 offenbart einen Fahrzeugradar, der einen Laserradarsensor mit einem rotierenden Polygonspiegel umfasst. Es ist ein erster Detektorschaltkreis vorgesehen, welcher Entfernungen aus wieder empfangenen Einzelpulsen bestimmt, sowie ein zweiter Detektorschaltkreis, in dem eine Vielzahl der wieder empfangenen Einzelpulse integriert wird. Dabei wird aus der Größe und Entfernung zu erfassender Objekte und dem Winkelabstand zwischen zwei Sendepulsen eine Anzahl von zu integrierenden Ereignissen berechnet. Damit das integrierende Verfahren eine mit dem Einzelpulsverfahren vergleichbare Winkelauflösung erhält, wird für einen neuen Messwert das Integrationsfenster nur um jeweils einen Einzelpuls und nicht um die Anzahl der integrierten Ereignisse verschoben.

Ein besonders effizientes und genaues Mittelungsverfahren für einen eindimensionalen Entfernungstaster wird in der DE 10 2007 013 714 A1 vorgestellt. Dabei wird eine Vielzahl von Einzelmessungen durch analoge Vorverarbeitung in ein bipolares Signal umgewandelt, anschließend binarisiert und so in einem Histogramm gesammelt. Aus dem Histogramm wird dann die Lichtlaufzeit ermittelt. Die EP 2 189 805, EP 2 189 804 und EP 2 189 814 setzen auf diesem Verfahren auf und erwähnen die Anwendbarkeit bei einem scannenden System, ohne aber auf die praktische Umsetzung einzugehen.

Eines der wichtigsten Kenndaten eines Laserscanners ist neben der Reichweite die tangentiale Auflösung oder Winkelauflösung. Sie gibt an, welche minimale Objektgröße der Laserscanner für ein Objekt mit einem bestimmten Reflexionsgrad noch erkennt, beziehungsweise wie gut der Laserscanner eine strukturierte Kontur auflöst und wie viele Abtastpunkte über einen Winkelbereich ausgegeben werden.

Für einen Sicherheitslaserscanner ist auch diese Winkelauflösung letztlich normiert. Laut IEC 61496-3 etwa muss ein rundes Objekt mit höchstens 2% Remission und einem vorgegebenen Durchmesser von beispielsweise 70 mm, 50 mm oder 30 mm sicher erkannt werden. Je nach gewünschter Reichweite und damit Ausdehnung der überwachbaren Schutzfelder ist zum Erkennen eines Objekts mit den genannten Durchmessern eine Winkelauflösung von 0,5° oder weniger notwendig.

Bei herkömmlichen Sicherheitslaserscannern wird ein deterministisches Einpulsverfahren eingesetzt. Das bedeutet, dass aus einem einzigen ausgesandten Laserpuls die Entfernung zu einem Objekt bestimmt wird. Um das geforderte tangentiale Auflösungsvermögen zu erreichen, werden die einzelnen Laserpulse mit einer bestimmten Pulswiederholfrequenz ausgesandt, so dass beispielsweise in jedes Winkelsegment von 0,5° oder 0,25° genau ein Einzelpuls fällt.

Dabei kann es vorkommen, dass ein Objekt minimaler zu detektierender Abmessungen versetzt zu diesem Winkelraster angeordnet ist. Dann trifft nur ein Teil des Lichtflecks auf das Objekt. Der übrige Teil wird nicht remittiert, und die entsprechende Sendeenergie geht für die Erfassung des Objekts und die Bestimmung von dessen Abstand verloren. Um dennoch die sichere Detektion zu gewährleisten, muss deshalb in dem Verhältnis von Winkelauflösung zu minimalem zu detektierendem Objektdurchmesser ein Sicherheitsfaktor vorgesehen werden. Dieser führt dazu, dass die Winkelauflösung um das zwei- bis dreifache feiner gewählt wird als die tangentiale Abmessung des minimalen zu detektierenden Objekts. Die auf das Objekt auftreffende Energie wird also nicht optimal genutzt. Entweder wird das Objekt überabgerastert, weil mehrere Sendepulse voll auf das Objekt treffen und damit bereits einer dieser Volltreffer ausgereicht hätte, oder es bleibt Energie von Teiltreffern ungenutzt, weil sie nicht für eine sichere Detektion gerade von schwach remittierenden Zielen ausreicht.

Es ist deshalb Aufgabe der Erfindung, einen Laserscanner mit verbesserter Ausnutzung der Sendeenergie anzugeben.

Diese Aufgabe wird durch einen Laserscanner nach Anspruch 1 und ein Verfahren zur Erfassung und Abstandsbestimmung nach Anspruch 10 gelöst. Dabei geht die Erfindung von den einleitend aus dem Stand der Technik bekannten Mittelungsverfahren aus, die als Mehrpulsverfahren eine dritte Klasse von Lichtlaufzeitmessungen neben Einzelpulslaufzeitverfahren und phasenbasierten Verfahren bilden. Die jeweils zu einem ausgesandten Einzelpuls zugehörigen Empfangssignale werden in Speicherplätzen eines Histogrammspeichers, also den Bins eines Histogramms gesammelt. Dazu wird jeweils den Abschnitten des Histogramms je Bin ein Wert zugeordnet. Beispielsweise entspricht die Binbreite der Samplingrate, und es wird der jeweilige Abtastwert akkumuliert, oder es wird für größere Binbreiten ein Mittelwert des zugehörigen Abschnitts des Empfangssignals gebildet. Nach einer ausreichenden Anzahl von Einzelpulsen wird das Histogramm ausgewertet. Die Bereitstellung eines jeden Messwertes wird so zunächst durch die Zeit limitiert, die bis zur Erreichung der erforderlichen Anzahl von Einzelpulsen benötigt wird. Deshalb ist mindestens ein zusätzlicher Histogrammspeicher vorgesehen, um ein erstes und ein zweites Histogramm in überlappenden Zeitintervallen zu sammeln. Der Laserscanner ist als Sicherheitsscanner mit einem Sicherheitsausgang ausgebildet, bei dem die Auswertungseinheit dafür ausgebildet ist, unzulässige Eingriffe in Schutzfelder innerhalb des Überwachungsbereichs zu erkennen und daraufhin ein sicherheitsgerichtetes Abschaltsignal an dem Sicherheitsausgang auszugeben. Durch die zusätzlichen Histogrammspeicher kann ein Pulsmittelungsverfahren auch für die sichere Erkennung kleiner, remissionsschwacher Objekte bei möglichst geringen Sendeleistungen eingesetzt werden.

Die Erfindung hat den Vorteil, dass durch die Implementierung weiterer Histogrammspeicher und entsprechende Auswertung praktisch die gesamte auf einem Objekt oder einem Prüfstab auftreffende Energie genutzt wird. Dabei kommt man ohne eine Änderung der Drehfrequenz der Ablenkeinheit oder der Pulswiederholrate des Lichtsenders aus. Es muss lediglich der zusätzliche Speicherplatz und die angepasste Logik für die Auswertung bereitgestellt werden. Der dadurch gewonnene Signalgewinn kann dann je nach Anforderung für Verbesserungen von einem oder mehreren unterschiedlichen Kenngrößen genutzt werden: eine Erhöhung der Reichweite, eine Verbesserung der Winkelauflösung, eine Verringerung der Ansprechzeit, eine Verkleinerung der Optiken, eine Reduzierung der Pulswiederholrate oder eine Reduzierung der Lichtsenderleistung. Die beiden letztgenannten Verbesserungen erlauben unter anderem zusätzlichen Spielraum beim Augenschutz und Verlängern die Lebensdauer der Lichtquelle.

Erfindungsgemäß stehen häufiger Messwerte zur Verfügung. Dies erleichtert den Umgang mit Teiltreffern, weil in einem der anderen Histogrammspeicher kurz nach oder kurz vor einem Teiltreffer praktisch das Äquivalent zu einem Volltreffer verfügbar ist. Die höhere Anzahl von Messwerten erlaubt auch eine höhere Winkelauflösung und damit beispielsweise in Navigationsanwendungen eine feine Umgebungskarte oder in Konturvermessungen eine größere Detailtreue.

Weiterhin wird durch die Erfindung die Anwendung von Pulsmittelungsverfahren in der Sicherheitstechnik ermöglicht oder zumindest verbessert. Dies erlaubt die Herstellung besonders kostengünstiger und kleiner Sensoren mit einem großen horizontalen Sichtbereich oder Winkelbereich. Ein solches Mehrpulsverfahren hat einen deutlich größeren Eindeutigkeitsbereich und eine deutlich geringere Störanfälligkeit, weil durch die statistische Auswertung auch bei sehr ungünstigem Signal/Rauschverhältnis der Einzelmessung noch genaue Messungen möglich sind. Zudem treten bei Einsatz eines Mehrpulsverfahrens in einem scannenden System Vorteile auf, die bei einem einfachen Einstrahltaster nicht relevant sind. Denn im Gegensatz zu dem bekannten Pulslaufzeitverfahren ist eine quasikontinuierliche, also nahezu lückenlose Abtastung des gesamten Winkelbereichs möglich, und es werden eine Reihe von Anpassungsmöglichkeiten erschlossen. Damit können spezielle Messanforderungen erfüllt werden.

Die Auswertungseinheit ist bevorzugt für eine Bestimmung und Ausgabe von Objektabständen in Echtzeit ausgebildet. Damit steht ein Abstandswert praktisch sofort zur Verfügung, beispielsweise immer sobald die Ablenkeinheit sich in den gemäß Winkelauflösung nächsten Winkelabschnitt weitergedreht hat.

Die Drehung der Ablenkeinheit ist bevorzugt in durch eine Winkelauflösung des Laserscanners vorgegebene Winkelabschnitte unterteilt, wobei in der Auswertungseinheit für jeden Winkelabschnitt ein erstes Zeitfenster zum Sammeln eines Histogramms und ein darauffolgendes zweites Zeitfenster zur Auswertung des Histogramms vorgesehen ist. Die Auswertung eines Histogramms benötigt eine Auswertungszeit, die der Zeit für das Aussenden einer Vielzahl von Einzelpulsen entsprechen kann. Jeder Winkelschritt lässt sich deshalb in zwei Phasen unterteilen, wobei zunächst das Histogramm gesammelt und anschließend ausgewertet und damit der Messwert bereitgestellt wird.

Es ist also eine Überlappung der Histogramme, die durch die mehreren Histogrammspeicher ermöglicht ist, und deren Auswertung zu trennen. In einer Alternative greift die Auswertungseinheit nacheinander in versetzten Auswertungsintervallen auf die Histogramme der Histogrammspeicher zu und erzeugt daraus einen Messwert. Das setzt bei einer Echtzeitauswertung voraus, dass die Rechenkapazität der Auswertungseinheit genügt, um die aneinandergereihten Auswertungszeitfenster für alle Histogrammspeicher ohne Zeitverzug abarbeiten zu können, bevor in einem der Histogrammspeicher ein Histogramm durch ein neues Histogramm überschrieben wird.

In einer vorteilhaften Ausführungsform weist die Auswertungseinheit mindestens zwei Auswertungskanäle auf, in denen jeweils Histogramme aus einem der Histogrammspeicher auswertbar sind. Damit können dann nicht nur aufgrund mehrerer Histogrammspeicher die Zeitfenster zum Aufakkumulieren von Histogrammen entflochten werden, sondern auch die Auswertungszeitfenster. Die Auswertungskanäle greifen also unabhängig voneinander auf verschiedene oder identische Histogramme zu und werten diese nebeneinander aus. Insbesondere können jeweils eineindeutige Zuordnungen von Histogrammspeicher und Auswertungskanal bestehen. Dann werden letztlich in jedem der Auswertungskanäle Empfangspulse in einem eigenen Histogramm gesammelt und jeweils aus dem Histogramm die Lichtlaufzeit vom Laserscanner zu einem Objekt und daraus ein Messwert für den Objektabstand bestimmt.

Die Auswertung in den Histogrammspeichern beziehungsweise Auswertungskanälen kann vollständig überlappen. Das führt dann zu einer redundanten Messung zur Aufdeckung von Hardwarefehlern. Zugleich entsteht aber auch die Freiheit, in den Auswertungskanälen gegeneinander versetzt überlappende Histogramme zu verarbeiten. Dies kann einerseits einer diversitär-redundanten Auswertung dienen. Die Auswertungskanäle bleiben dabei unabhängig voneinander, haben aber ein unterschiedliches Winkelraster, so dass in der Summe eine höhere Robustheit erzielt wird als bei reiner Redundanz. Andererseits lassen sich auf diese Weise aber auch Probleme mit Änderungen der Drehgeschwindigkeit lösen und zusätzliche Messinformationen gewinnen. Eine weitere Ausführungsform wertet in einem Auswertungskanal Einzellichtpulse geringer Sendeleistung und in dem anderen Auswertungskanal alternierend ausgesandte Einzellichtpulse hoher Sendeleistung aus.

Die Histogrammspeicher beziehungsweise Auswertungskanäle können aber auch für eine Überlappung ausgebildet sein, die nur bei Drehschwankungen auftritt und bei der die Histogramme prinzipiell direkt aufeinanderfolgen. Wenn aber wegen einer Drehschwankung am Ende eines Wnkelsegments ein Histogramm noch nicht gefüllt ist, startet in einem anderen Histogrammspeicher überlappend das Akkumulieren eines neuen Histogramms. Damit wird auch bei Drehschwankungen eine lückenlose Abtastung erreicht.

Die Kriterien, nach denen Histogramme in einem Histogrammspeicher gesammelt werden, können sich untereinander nicht nur um einen gegenseitigen Zeitversatz unterscheiden. Beispielsweise kann ein Histogrammspeicher über wenige Empfangssignale nur kleine Winkelbereiche sammeln, der andere dagegen eine Vielzahl von Ereignissen. Damit stehen aus derselben physischen Messung sowohl Messwerte mit geringer Reichweite und hoher Winkelauflösung als auch Messwerte mit großer Reichweite und geringer Winkelauflösung zur Verfügung. Dies ist nur ein Beispiel für unterschiedliche Auswertungen. Auswertungskanäle können in einem anderen Beispiel mit einem gegenseitigen Versatz arbeiten, bei dem Gruppen mit einer gleichen vorgegebenen Anzahl von Empfangspulsen gebildet werden, der eine Auswertungskanal aber die Gruppen jeweils mit dem Winkelpositionssignal beginnt und die anderen Auswertungskanäle ihre Gruppen in gleichmäßigen Abständen zwischen zwei Winkelpositionssignalen beginnen. Dadurch entsteht eine Art gleitender Durchschnitt, mit einer Auflösungsvervielfachung entsprechend der Anzahl von Histogrammspeichern oder Auswertungskanälen.

Der Histogrammspeicher ist bevorzugt dafür ausgebildet, zu jedem aufakkumulierten Abschnitt eines Empfangssignals einen Zeitstempel zu speichern und jeweils rollierend bei Hinzunahme eines weiteren Empfangssignals das älteste Empfangssignal zu löschen. Damit entsteht ein Histogramm, welches zu jedem Zeitpunkt die jüngsten Ereignisse enthält, so dass praktisch aus jedem ausgesandten Einzelpuls ein Messwert abgeleitet werden kann. Allerdings können hierfür nicht einfach Ereignisse in einem Histogramm akkumuliert werden. Damit ginge die zeitliche Reihenfolge verloren, so dass das Löschen des jeweils ältesten Ereignisses unmöglich wäre. Stattdessen muss in jedem Bin eine Liste der Einzelbeitrage mit einem Zeitstempel geführt werden, oder es werden alle jüngeren Empfangssignale gespeichert, um jeweils das älteste unter diesen gespeicherten Empfangssignalen von dem Histogramm abziehen zu können.

Die Auswertungseinheit ist bevorzugt dafür ausgebildet, Histogramme mehrerer Histogrammspeicher in einem Histogrammspeicher zusammenzufassen. Beispielsweise finden Auswertungen schon in sehr feinen Winkelschritten von 0,1° statt. Das genügt noch nicht für eine sichere Detektion, weil die Energie für den spezifizierten Fall eines kleinsten Zieles mit schlechter Remission nicht ausreichen würde. Dennoch können solche Messwerte schon nützlich sein. Um sichere Messwerte zu gewinnen, werden dann beispielsweise fünf solcher Histogramme zusammengefasst, um nach 0,5° auch einen sicheren Messwert zu erhalten.

Vorzugsweise ist mindestens ein A/D-Wandler vorgesehen, um Empfangssignale zum Aufakkumulieren in den Histogrammspeichern zu digitalisieren. Damit kann die Auswertung auf einem digitalen Logikbaustein stattfinden. In einer besonders bevorzugten Weiterbildung ist der A/D-Wandler ein Binarisierer, und die Speicherplätze sind als Zähler ausgebildet. Das ermöglicht eine besonders einfache Implementierung.

Die Histogrammspeicher, die Auswertungseinheit und der A/D-Wandler sind bevorzugt auf einem gemeinsamen digitalen Logikbaustein implementiert, insbesondere einem FPGA. Das führt zu äußerst geringen Herstellkosten, weil lediglich der FPGA entsprechend programmiert werden muss.

Vorteilhafterweise ist ein analoger Vorverarbeiter vorgesehen, der einen Filter aufweist, um jeweils den Empfangspuls zu einem bipolaren vorverarbeiteten Signal umzuwandeln und über einen A/D-Wandler der Auswertungseinheit zuzuführen. Lichtsignale sind stets unipolar, weil Lichteinfall in dem Lichtempfänger nur ein positives Signal erzeugen kann. Durch einen nachgeschalteten Filter, der durch den Lichteinfall in eine Schwingung versetzt wird, beispielsweise einen Bandpassfilter oder ein Differenzierglied, entsteht ein bipolares Signal, in dem sich durch digitale Signalverarbeitung nach der A/D-Wandlung ein Empfangszeitpunkt anhand eines Nulldurchgangs bestimmen lässt. Dies ist wesentlich präziser als die Bestimmung der Lage eines beispielsweise positiven Peaks, weil der Nulldurchgang nicht von der Signalstärke und damit Sende- und Umgebungsparametern abhängt. Dem Filter ist bevorzugt ein Verstärker, insbesondere Transimpedanzverstärker vor- oder nachgeordnet. Außerdem weist der analoge Vorverarbeiter besonders bevorzugt einen Begrenzungsverstärker zur Verstärkung des positiven beziehungsweise negativen Anteils des Signals bis auf einen Sättigungswert auf, wobei dann der A/D-Wandler ein Binarisierer ist. So wird ein binäres Empfangssignal gebildet, welches eine besonders ressourcenschonende statistische Auswertung erlaubt.

Die geeignete Zusammenfassung von zu ausgesandten Einzelpulsen gehörigen Empfangssignalen zu Histogrammen wird in realen Anwendungen gestört, welche die Annahme einer regelmäßigen Zuordnung von Ereignissen zu Winkeln verletzen. Störungen sind beispielsweise Drehzahlschwankungen durch Toleranzen des Antriebs oder Stöße, besonders bei mobilen Anwendungen des Laserscanners wie bei führerlosen Transportsystemen oder der Fahrassistenz. Um also eine quasikontinuierliche Abtastung mit der gewünschten Winkelauflösung zu erzielen, ist es hilfreich, eine intelligente Zuordnung von Ereignissen zu bestimmten Erfassungswinkeln zu wählen und damit für Robustheit zu sorgen.

Die Winkelmesseinheit stellt dazu als Basis bevorzugt Winkelpositionssignale in einer vorgegebenen Winkelauflösung bereit. Die Winkelauflösung kann direkt der äquidistanten, gleichmäßigen inkrementellen Codierung einer Winkelmaßverkörperung entsprechen. Aus derart tatsächlich gemessenen Winkelpositionen kann aber auch durch Interpolation oder Extrapolation eine andere gleichmäßige oder in unterschiedlichen Erfassungsrichtungen unterschiedliche Winkelauflösung berechnet werden.

Das physisch in der Winkelmesseinheit bestimmte oder aus deren Signalen berechnete Winkelpositionssignal wird im einfachsten Fall als eine Art Winkeltrigger verwendet, der die Aufzeichnung eines Histogramms startet. Alternativ kann aber auch nachträglich eine andere Zuordnung erfolgen, bei welcher beispielsweise das Winkelpositionssignal am Ende oder an einer sonstigen Position innerhalb der Gruppe von Empfangspulsen liegt.

Die Auswertungseinheit ist bevorzugt dafür ausgebildet, jeweils zu einem Winkelpositionssignal eine vorgegebene Anzahl von Empfangssignalen in einem Histogramm zu sammeln. Diese Anzahl ist in einer Ausführungsform für alle Winkelpositionssignale die gleiche, so dass also zu jedem Erfassungswinkel ein Histogramm mit gleicher Anzahl von Messwiederholungen gebildet wird. Dabei ist nicht zwingend erforderlich, dass die Empfangssignale einer Gruppe direkt aufeinanderfolgen; so können beispielsweise Empfangspulse alternierend zwei unterschiedlichen Histogrammen zugewiesen werden. Das kann dann dafür genutzt werden, abwechselnd Einzellichtpulse mit hoher und niedriger Leistung auszusenden. Dadurch erhält man einen Messwert aus einer Abtastung mit hoher Leistung für Ziele geringer Remission und einen Messwert aus einer Abtastung mit geringer Leistung für ein stark remittierendes Ziel wie einen Reflektor, welches Sättigung oder Übersteuerung vermeidet. Vorzugsweise ist der zeitliche Abstand zwischen zwei Einzellichtpulsen konstant, der Lichtsender arbeitet also mit einer konstanten Wiederholfrequenz. Alternativ werden, um die Abtastungen auf dem Zeitstrahl zu verschmieren und Artefakte durch ein diskretes Raster zu reduzieren, die Einzellichtpulse mit individuellen Zeitoffsets versehen, so dass sie nur im Mittel eine konstante Wiederholfrequenz erreichen.

Die Anzahl der Einzelpulse sowie der zeitliche Abstand zwischen je zwei Einzellichtpulsen ist bevorzugt klein genug, um einen Zeitpuffer zwischen dem jeweils letzten Empfangssignal eines Histogramms und dem nachfolgenden Winkelpositionssignal zu lassen. So wird demnach nur eine kleinere Anzahl von Empfangspulsen ausgewertet, als bei optimaler Ausnutzung des Zeitbudgets zwischen zwei Winkelpositionssignalen möglich wäre. Dadurch werden Schwankungen der Drehbewegung aufgefangen und sichergestellt, dass die Gruppe von Empfangspulsen beim nachfolgenden Winkelpositionssignal vollständig ist. Vorzugsweise werden auf ein Winkelpositionssignal hin auch nur so viele Einzellichtpulse erzeugt wie ausgewertet, es entstehen dann Sendepausen während des Zeitpuffers. Alternativ werden kontinuierlich Einzellichtpulse ausgesandt, während des Zeitpuffers aber nicht ausgewertet.

Alternativ zu einem Zeitpuffer wird bei jedem neuen Winkelpositionssignal ein Histogramm abgeschlossen und ein neues Histogramm begonnen. Dann ist mitunter, besonders bei Änderungen der Drehgeschwindigkeit, die Anzahl Empfangssignale in den Gruppen untereinander verschieden. Dies führt zu einer unterschiedlichen Statistiktiefe und damit zu einer Reichweitenschwankung mit dem Erfassungswinkel.

Die Auswertungseinheit ist bevorzugt dafür ausgebildet zu prüfen, ob in dem Zeitraum, in dem die vorgegebene Anzahl von Empfangssignalen erfasst wird, ein weiteres Winkelpositionssignal liegt, und in diesem Fall den aus dem Histogramm bestimmten Messwert für den Objektabstand demjenigen Winkelpositionssignal zuzuordnen, dem die Empfangssignale mehrheitlich zugehören, insbesondere zu dem die aufaddierten Zeitabstände zu den Empfangssignalen des Histogramms am geringsten sind. Hierbei wird kein Zeitpuffer vorgehalten, damit die maximale Messinformation mit einer höchstmöglichen Anzahl von Einzelmessungen je Umdrehung der Ablenkeinheit erfasst wird. Um dennoch Reichweitenschwankungen bei unterschiedlichen Erfassungswinkeln zu vermeiden, wird die vorgegebene Anzahl an Empfangssignalen in einem Histogramm gesammelt, selbst wenn dazwischen ein weiteres Winkelpositionssignal liegt, welches eigentlich den Beginn der Erfassung eines neuen Histogramms für den nächsten Messwert erforderte. Im Anschluss wird der Messwert demjenigen Winkelpositionssignal zugeordnet, welches die Winkelzugehörigkeit des Histogramms am besten repräsentiert. Solange sich die Drehgeschwindigkeit so verhält wie vorgesehen, sind die Zeitintervalle zwischen zwei Winkelpositionssignalen und die vorgegebene Anzahl vorzugsweise aufeinander abgestimmt, so dass diese nachträgliche Zuordnung entfällt. Ansonsten kann es durch fortgesetzte Verzögerung des Sammelns der vorgegebenen Anzahl auch dazu kommen, dass ein Messwert bereits dem übernächsten Winkelpositionssignal zugeordnet wird. Für das derart ausgelassene Winkelpositionssignal kann dann ein Messwert interpoliert werden.

Die Auswertungseinheit ist bevorzugt dafür ausgebildet, die Auswahl von Empfangssignalen zu einem Histogramm zeitlich verzögert vorzunehmen. Damit wird nur noch eine zeitlich leicht verzögerte Quasi-Echtzeitauswertung der Messung erreicht, beispielsweise verzögert um eine oder eine halbe Scanperiode. Bei üblichen Drehfrequenzen der Ablenkeinheit gehen dabei aber nur geringe Bruchteile einer Sekunde gegenüber einer Echtzeitauswertung verloren. Dafür sind im Nachhinein beliebige und anpassbare Histogrammaufteilungen möglich. Die Empfangssignale sollten zu diesem Zweck wie bei dem oben diskutierten rollierenden Histogramm eine Art Zeit- oder Winkelstempel tragen, so dass im Nachhinein noch eine Zuordnung eines Empfangssignals zu einer Winkelposition möglich bleibt.

Die Auswertungseinheit ist bevorzugt dafür ausgebildet, in Abhängigkeit von dem Erfassungswinkel und/oder in Abhängigkeit eines zuvor bestimmten Objektabstands die Anzahl von Empfangssignalen in einem Histogramm anzupassen. Unterschiedliche statistische Tiefen der Histogramme haben die praktische Auswirkung einer unterschiedlichen Reichweite und Winkelauflösung. Bei einer Abhängigkeit vom Erfassungswinkel werden auf diese Weise Winkelbereiche mit höherer Reichweite bei geringerer Winkelauflösung gebildet und umgekehrt, so dass je nach Anwendung eine höhere Flexibilität gegeben ist. Eine adaptive Abhängigkeit der Histogrammzuordnung anhand eines zuvor bestimmten Objektabstands dient beispielsweise dazu, anfänglich den leeren Überwachungsbereich mit hoher Reichweite und geringer Winkelauflösung abzutasten, dann aber für bereits erfasste Objekte überall oder in einer Winkelumgebung von deren Erfassungswinkel die Reichweite herabzusetzen, um eine größere Winkelauflösung zu gewinnen.

Der Laserscanner weist bevorzugt eine Parametriereinrichtung auf, um eine höhere Winkelauflösung bei geringerer Reichweite des Sensors einzustellen oder umgekehrt. Die Parametriereinrichtung kann als Bedienfeld am Laserscanner oder als Anschluss für eine Datenverbindung ausgestaltet sein. Durch die zusätzliche Parametrierbarkeit entsteht eine höhere Flexibilität für Bedürfnisse der konkreten Anwendung. Umgesetzt wird die Einstellung durch eine veränderte Histogrammzuordnung, welche Empfangssignale je nach Parametrierung unter Erhöhen oder Herabsetzen der Reichweite über einen kleineren oder größeren Winkelbereich sammelt.

Das Histogramm ist bevorzugt schon vor dem Sammeln der Empfangspulse mit Vorladewerten vorbelegt, wobei insbesondere die Vorladewerte von dem Erfassungswinkel abhängig sind. Damit wird eine Erwartungshaltung abgebildet, die dann das Messergebnis modifiziert.

Die Vorladewerte sind bevorzugt aus einer Kalibriermessung in einem Referenzzustand des Überwachungsbereichs bestimmt. Die Erwartungshaltung wird so durch eine anfängliche Messung erhalten. Vorgeladen werden dann bevorzugt, gegebenenfalls nach Mittelung über eine größere Zahl von Kalibriermessungen oder andere Vorverarbeitung, nicht die Referenzwerte selbst, sondern deren Negation. Eine Messung gleicht dann automatisch zunächst die Erwartungshaltung aus, ehe die Messwerte tatsächlich durchschlagen. Als ein Beispiel ist das Vorladen eines Frontscheibenreflexes zu nennen. Dabei handelt es sich um einen Anteil des Empfangssignals, das von einer Reflexion der Einzellichtpulse an der Frontscheibe schon im Sensorinneren herrührt und die Messung stört. Die typische Form des Frontscheibenreflexes kann dann vorab gemessen und in den Histogrammen vorgeladen werden, so dass die entstehenden Histogramme von dieser Störung befreit sind. Ein anderes Beispiel ist das Vorladen einer Referenzszenerie. Der Sensor registriert dann nur noch dynamische Änderungen einer bekannten Objektanordnung. Im Unterschied zu einem Vorladen des Frontscheibenreflexes, der in der Regel alle Histogramme in gleicher Weise betrifft, werden bei einer Referenzszenerie die Histogramme winkelabhängig unterschiedlich vorgeladen.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2: eine schematische Schnittdarstellung durch eine andere Ausführungsform eines Laserscanners;
- Fig. 3: eine Blockdarstellung einer analogen Signalvorverarbeitung und einer digitalen Auswertung des Laserscanners gemäß Figur 1 oder Figur 2;
- Fig. 4: eine Darstellung der Signale in verschiedenen Verarbeitungsstufen der Vorverarbeitung und Auswertung gemäß Figur 3;
- Fig. 5a: einen beispielhaften zeitlichen Intensitätsverlauf eines von einem Lichtempfänger eines Laserscanners aufgezeichneten Empfangssignals bei geringer Mittelungstiefe und damit Reichweite;
- Fig. 5b: ein Intensitätsverlauf ähnlich Figur 5a bei hoher Mittelungstiefe und damit Reichweite;
- Fig. 6a: eine schematische Draufsicht auf die Winkelverteilung der Einzellichtpulse eines Laserscanners bei hoher Reichweite und geringer Winkelauflösung;
- Fig. 6b: eine Darstellung ähnlich Figur 6a bei geringer Reichweite und hoher Winkelauflösung;
- Fig. 7a: eine schematische Draufsicht auf die Winkelverteilung der Einzellichtpulse eines Laserscanners als Vergleichsbild;
- Fig. 7b: eine Darstellung ähnlich Figur 7a bei erhöhter Scanfrequenz und deshalb verringerter Reichweite;
- Fig. 7c: eine Darstellung ähnlich Figur 7a bei erhöhter Scanfrequenz und einer anstelle der Reichweite verringerten Winkelauflösung;
- Fig. 8a: eine schematische Darstellung von Abtaststrahlen auf einem Testobjekt in einer ersten Konfiguration mit nur einem Volltreffer;
- Fig. 8b: eine schematische Darstellung von gegenüber Figur 8a leicht versetzt auf einem Testobjekt auftreffenden Abtaststrahlen mit zwei Volltreffern;
- Fig. 9: eine schematische Darstellung des Zeitablaufs bei der Messwerterfassung mit nur einem Histogrammspeicher;
- Fig. 10: eine schematische Darstellung ähnlich Figur 9 bei der Messwerterfassung mit zwei Histogrammspeichern;
- Fig. 11: eine schematische Darstellung ähnlich den Figuren 9 und 10 bei der Messwerterfassung mit mehreren, beispielsweise fünf Histogrammspeichern;
- Fig. 12a-d: eine schematische Darstellung der zeitlichen Abfolge von Histogrammen, bei denen jeweils ein aktuell erfasstes Empfangssignal das älteste zuvor erfasste Empfangssignal ersetzt;
- Fig. 13: eine schematische Darstellung von Winkelbereichen, die zu Histogrammen zur hochaufgelösten Erfassung von nicht sicheren und zur daraus zusammengefassten Erfassung von sicheren Messwerten zugehörig sind;
- Fig. 14a: eine zeitliche Übereinanderstellung von Winkelpositionssignalen, Einzellichtpulsen und deren Gruppierung bei regelmäßiger Drehung der Ablenkeinheit;
- Fig. 14b Fig. 15: eine Darstellung ähnlich Figur 14a bei einer Drehzahlschwankung; und eine zeitliche Übereinanderstellung der Einzellichtpulse, der Signale einer Winkelmesseinheit, der daraus abgeleiteten Winkelpositionssignale und Winkelsegmente sowie einer dynamischen Zuordnung von Gruppen von Einzellichtpulsen zu Winkelsegmenten.

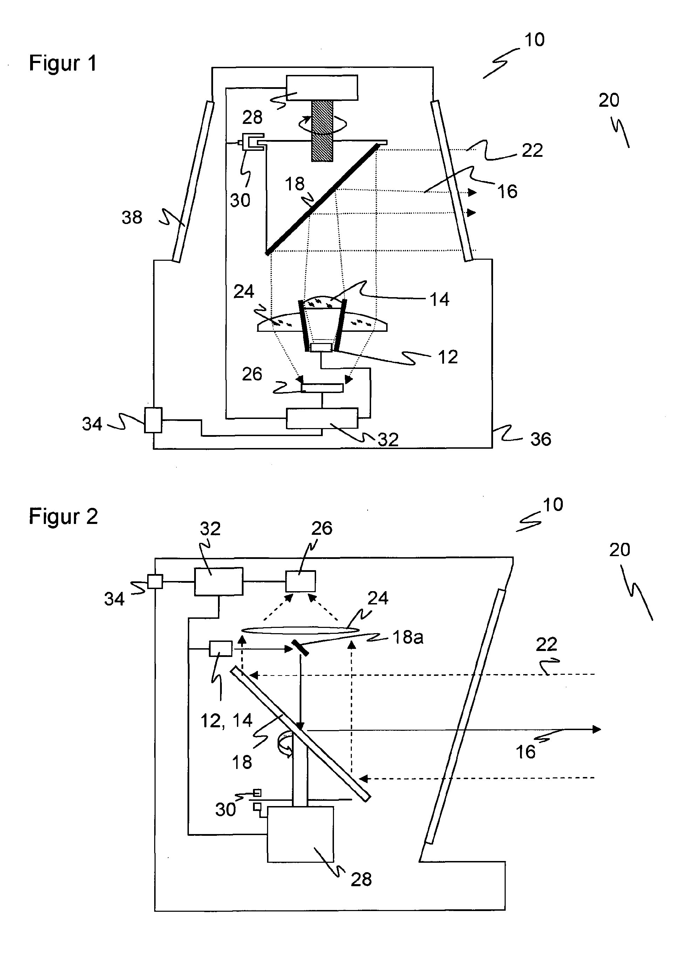

Figur 1 zeigt eine schematische Schnittdarstellung durch einen Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD).

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

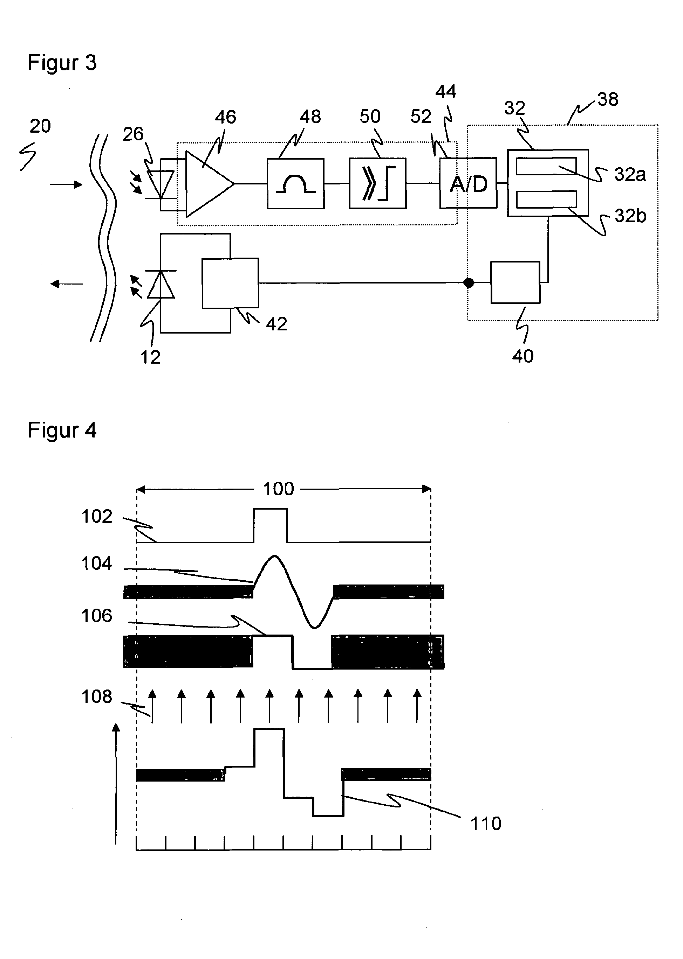

Eine Auswertungseinheit 32 ist mit dem Lichtsender 12, dem Lichtempfänger 26, dem Motor 28 und der Winkelmesseinheit 30 verbunden. In einem anhand der Figuren 3 und 4 noch genauer zu erläuternden Mehrpulsvertahren wird die Lichtlaufzeit zwischen Aussenden des Sendelichtstrahls 16 und Empfang von remittiertem Licht 22 gemessen, um unter Verwendung der Lichtgeschwindigkeit auf die Entfernung eines angetasteten Objektes von dem Laserscanner 10 zu schließen. Die jeweilige Winkelstellung, unter welcher dabei der Sendelichtstrahl 16 ausgesandt wurde, ist der Auswertungseinheit von der Winkelmesseinheit 30 bekannt. Dabei sind die Lichtlaufzeiten gegenüber üblichen Drehfrequenzen der Ablenkeinheit 18 vernachlässigbar, so dass der Sendelichtstrahl 16 praktisch unter demselben Winkel ausgesandt wie zugehöriges remittiertes Licht 22 empfangen wird.

Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 34 übertragen oder am Laserscanner 10 angezeigt werden. Die Schnittstelle 34 dient umgekehrt auch als Parametrierschnittstelle, über welche der Auswertungseinheit 32 Daten eingespielt werden können. Alternativ kann eine eigene Parametrierschnittstelle vorgesehen sein. Bei Anwendungen in der Sicherheitstechnik kann die Schnittstelle 34 sicher ausgebildet, insbesondere ein sicherer Ausgang (OSSD, Output Signal Switching Device) für ein sicherheitsgerichtetes Abschaltsignal bei Erkennen einer Schutzfeldverletzung sein. Der Laserscanner 10 ist in einem Gehäuse 36 untergebracht, welches eine umlaufende Frontscheibe 38 aufweist.

Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative Lösungen, etwa mit einem eigenen Spiegelbereich für den Sendelichtstrahl 16 oder mit Teilerspiegeln. Auch die Geometrie des Gehäuses 36 und der Frontscheibe 38 sind rein beispielhaft zu verstehen.

Figur 2 zeigt eine alternative Ausführungsform des Laserscanners 10. Dabei bezeichnen gleiche Bezugszeichen die gleichen oder einander entsprechenden Merkmale. Die Funktionsweise ist weitgehend die gleiche wie bei dem Laserscanner 10 gemäß Figur 1. Unterschiede bestehen in dem Sendepfad, der hinter dem Lichtsender 12 mit Hilfe einer zusätzlichen Ablenkeinheit 18a gefaltet ist und nur eine in den Lichtsender 12 integrierte Sendeoptik 14 aufweist, in der Gestaltung der Empfangsoptik 24 und in der Form des Gehäuses 36 und der Frontscheibe 38. Diese Variationen sollen nur als Beispiele die unterschiedlichen Möglichkeiten illustrieren, einen Laserscanner 10 aufzubauen.

In sicherheitstechnischer Anwendung überwacht die Auswertungseinheit 32, die zugleich die Steuerungsfunktionen in dem dann als Sicherheitslaserscanner ausgebildeten Laserscanner 10 übernimmt, Schutzfelder innerhalb des Überwachungsbereichs 20, deren Geometrien beispielsweise durch eine grafische Konfiguration festgelegt werden, auf unzulässige Objekteingriffe. Wird ein sicherheitskritischer Eingriff erkannt, so gibt die Auswertungseinheit 32 über den Sicherheitsausgang 34 ein Absicherungssignal an eine überwachte Gefahrenquelle aus, beispielsweise eine Maschine.

Die Laufzeitmessung erfolgt in einem Mehrpulsverfahren, das nun anhand der Figuren 3 und 4 näher erläutert wird. Das Mehrpulsverfahren ist für eindimensionale Entfernungstaster aus der einleitend genannten DE 10 2007 013 714 bekannt, und hierauf wird für ergänzende Erklärungen verwiesen.

Die Auswertungseinheit 32 mit hier beispielhaft zwei Histogrammspeichern beziehungsweise Auswertungskanälen 32a-b ist auf einem digitalen Baustein 38 implementiert, beispielsweise einem FPGA (Field Programmable Gate Array). Auf einem Sendepfad veranlasst die Auswertungseinheit 32 über eine Verzögerungseinrichtung 40 und eine Lasertreiberschaltung 42 den Lichtsender 12 zum Aussenden von Einzellichtpulsen zu wohldefinierten Zeitpunkten. Die Verzögerungseinheit 40 kann durch Register, Zähler und dergleichen des FPGA realisiert sein.

Das remittierte Licht 22 eines Einzellichtpulses wird von dem Lichtempfänger 26 in einen Empfangspuls gewandelt und über einen analogen Vorverarbeiter 44 mit einem Vorverstärker 46, einem Filter 48 und einem Begrenzungsverstärker 50 sowie über einen A/D-Wandler 52 der Auswertungseinheit 22 zugeführt. Vorverstärker 46 und Filter 48 können auch vertauscht angeordnet sein.

Die dabei in den verschiedenen Zwischenstufen entstehenden Signale zeigt Figur 4. Der Lichtsender 12 erzeugt in jeder Messperiode 100 jeweils einen Einzellichtpuls, der die Bestimmung eines präzisen Zeitpunkts ermöglicht. Dafür eignet sich ein Rechteckpuls, es sind aber auch andere Pulse vorstellbar, wie beispielsweise Gausspulse. Der Einzellichtpuls wird in dem Überwachungsbereich 20 reflektiert oder remittiert und dann in dem Lichtempfänger 26 in einen elektrischen Empfangspuls 102 umgewandelt und in dem Transimpedanzverstärker 46 verstärkt. Der Empfangspuls 102 ist idealisiert dargestellt, unter realistischen Bedingungen kämen Rauschanteile und Formverzerrungen hinzu.

Der Empfangspuls 102 ist aufgrund der Natur des Lichtes immer ein unipolares Signal. In dem Filter 48, beispielsweise einem Bandpassfilter, wird daraus ein bipolares Signal 104, von dem nur die beiden ersten Schwingungen gezeigt sind. Neben dem eigentlichen bipolaren Signal 104 symbolisieren graue Rechtecke einen Rauschpegel. In dem Begrenzungsverstärker 50 wird das bipolare Signal 104 bis in die Sättigung hinein verstärkt und abgeschnitten, so dass das eigentliche Signal zu einer Rechteckflanke 106 und der durch graue Rechtecke dargestellte Rauschpegel in seiner Amplitude über den gesamten Dynamikbereich gedehnt wird.

Die Rechteckflanke 106 wird in dem insbesondere als Binarisierer ausgebildeten A/D-Wandler 52 abgetastet. Jeder Stützpunkt der Abtastung wird durch einen Pfeil 108 symbolisiert. Die entstehende Bitfolge wird in der Auswertungseinheit 32 verwendet, um ein Histogramm 110 zu bilden. Dafür ist für jedes Bin ein Akkumulator vorgesehen, der nur bei einem zugehörigen Bitwert "1" heraufgezählt wird. Bei idealen, unverrauschten Signalen würde in diesem Histogramm nur dasjenige Bin gefüllt, über dem die Rechteckflanke 106 liegt. Der von dem Begrenzungsverstärker 50 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 110 über n Messperioden 100 gebildet, so sind die Bins durch das Rauschen ungefähr mit dem Wert n/2 gefüllt, wobei statistische Schwankungen hinzukommen. Dieser Wert n/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Den dazwischenliegenden Nulldurchgang detektiert die Auswertungseinheit 32, um den Empfangszeitpunkt unabhängig von dem Signalpegel zu bestimmen.

Durch die statistische Auswertung einer Vielzahl von Einzelmessungen wird das Signal-Rausch-Verhältnis so weit angehoben, dass auch bei gestörten Umgebungsbedingungen robuste Entfernungsmessungen möglich sind. Dies gilt auch dann, wenn ein einzelner verstärkter Empfangspuls 102 so stark verrauscht ist, dass keinerlei Unterschiede zwischen Nutzsignal und Rauschen erkennbar sind.

Figur 4 zeigt nur einen relevanten Ausschnitt der Messperiode 100 um den Empfangszeitpunkt herum. Um Speicher zu sparen, kann dieser Zeitbereich vorab gesucht und das Histogramm 110 nur für einen Teil der Messperiode 100 gebildet werden.

Während des Abtastens des Überwachungsbereichs 20 durch den Laserscanner 10 werden wie soeben erläutert Einzellichtpulse ausgesandt und von der Auswertungseinheit 32 in einem Histogramm 110 gesammelt und ausgewertet. Durch die Drehbewegung der Ablenkeinheit 18 erhält jeder Einzellichtpuls einen eigenen Winkelversatz. Das Mehrpulsverfahren unterstützt eine Austauschbeziehung zwischen Scanfrequenz, Winkelauflösung und Reichweite. Diese hängen über die Statistik- oder Mittelungstiefe miteinander zusammen, also die Anzahl an Empfangspulsen 102, die jeweils in einem Histogramm 110 für einen Messwert zusammengefasst werden. Eine vierte denkbare Stellschraube bietet die Wiederholfrequenz der Einzellichtpulse, die aber hier als konstant angenommen wird.

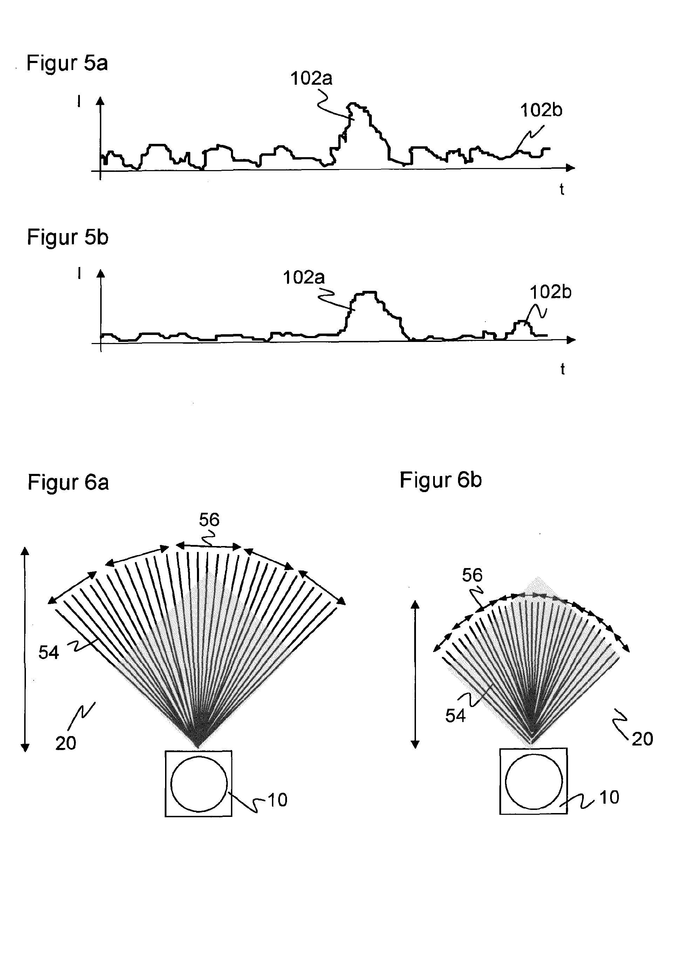

Die Austauschbarkeit der genannten Parameter wird nun anhand der Figuren 5 bis 7 erläutert. Figur 5a zeigt einen zeitlichen Intensitätsverlauf bei geringer, Figur 5b dagegen bei höherer Mittelungstiefe. Ein Empfangspuls 102b im Nahbereich ist in beiden Fällen gut vom Rauschpegel unterscheidbar. Dagegen lässt sich ein Empfangspuls 102b im Fernbereich nur bei der höheren Mittelungstiefe gemäß Figur 5b vom Rauschen separieren. Je größer demnach die Statistiktiefe, umso höher wird die Reichweite des Laserscanners 10.

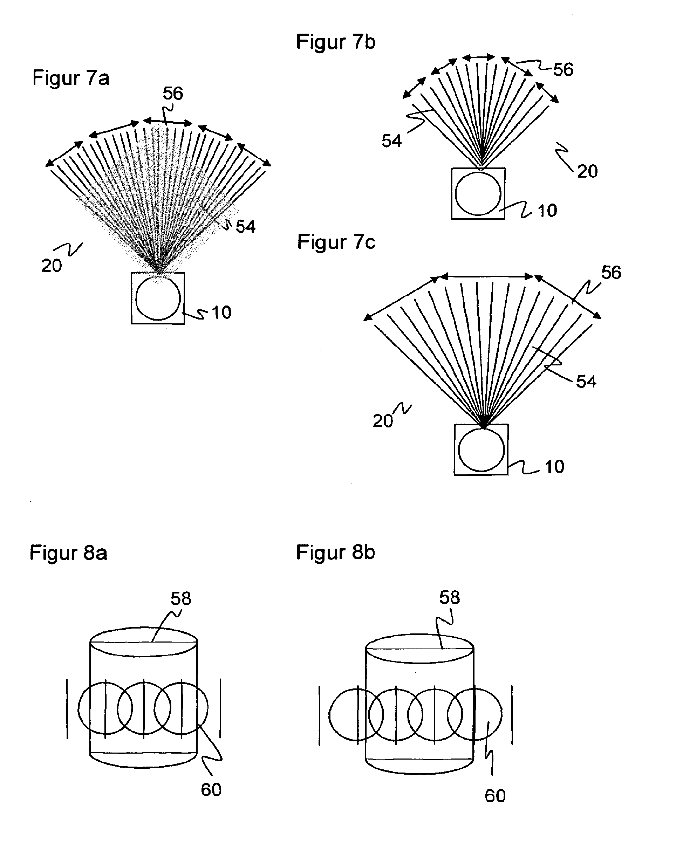

Die Figuren 6 und 7 zeigen jeweils den Laserscanner 10 und Einzellichtpulse 54 über einen Teil der Scanperiode in der Draufsicht. Dabei sind diejenigen Einzellichtpulse 54, deren zugehörige Empfangspulse 102 jeweils in einem Histogramm 110 zusammengefasst werden, durch einen Pfeil 56 verbunden. In der Realität würde allerdings meist eine sehr viel größere Anzahl von beispielweise einigen hundert oder noch mehr Einzellichtpulsen 54 je Grad ausgesandt.

Figur 6 erläutert die Austauschbarkeit von Winkelauflösung und Reichweite. In Figur 6a werden die Einzellichtpulse 54 jeweils zu größeren Gruppen 56 zusammengefasst. Deshalb sind nach dem in Figur 5 illustrierten Zusammenhang Objekte auch noch in einer relativ großen Reichweite erfassbar. Dafür benötigt jede Gruppe 56 einen verhältnismäßig großen Winkelbereich. Soll dagegen wie in Figur 6b eine feinere Winkelauflösung erzielt werden, so werden die Gruppen 56 kleiner, und die verringerte Mittelungstiefe führt zu einem schlechteren Signal/Rauschverhältnis und damit einer verminderten Reichweite.

Eine ganz ähnliche Austauschbarkeit ist auch für die Scanfrequenz gegeben. Figur 7a zeigt ein Vergleichsbild bei einer bestimmten Scanfrequenz. Wird die Scanfrequenz erhöht, so fallen über dem selben Winkelbereich weniger Einzellichtpulse 54 ab. Man kann nun entweder wie in Figur 7b gezeigt die Winkelauflösung beibehalten. Dann reduziert sich wegen der geringeren Statistiktiefe die Reichweite. Alternativ kann wie in Figur 7c die Reichweite aufrecht erhalten werden, jedoch verschlechtert sich dann die Winkelauflösung, weil für dieselbe Statistiktiefe Einzellichtpulse 54 über einen größeren Winkelbereich gesammelt werden müssen. Selbstverständlich sind nach diesem Prinzip alle Zwischenstufen denkbar, bei der also sowohl Reichweite als auch Winkelauflösung herabgesetzt werden, jedoch jeweils in geringerem Ausmaß.

In einer Ausführungsform der Erfindung ist vorgesehen, diese Austauschbarkeit auszunutzen und die Reichweite, Scanfrequenz und Winkelauflösung parametrierbar zu gestalten. Der Anwender gibt dann beispielsweise eine oder mehrere der Größen vor, und der Laserscanner 10 passt über die Statistiktiefe die übrigen Größen an. Ebenso sind adaptive Verfahren denkbar, bei denen Reichweite und Winkelauflösung variabel sind. Dabei ist eine zeitliche Abhängigkeit ebenso möglich wie eine Sichtwinkelabhängigkeit. Es wird dann beispielsweise ein bestimmter Winkelbereich bei geringer Reichweite und hoher Winkelauflösung, der Restwinkelbereich bei hoher Reichweite und geringer Winkelauflösung erfasst. Ein anderes Beispiel ist ein führerloses Transportfahrzeug, welches zunächst mit einer groben Winkelauflösung und hoher Reichweite navigiert, um dann bei Erfassung eines Objekts auf eine zunehmend bessere Winkelauflösung umzuschalten, während die Reichweite an die nun bekannte Objektentfernung angepasst wird. Auch dies kann zusätzlich winkelabhängig geschehen.

Das Mehrpulsverfahren arbeitet quasikontinuierlich, weil der Lichtsender 12 fortlaufend Einzellichtpulse 54 aussendet, jeweils eine Gruppe 56 der daraufhin registrierten Empfangspulse 102 zusammengefasst und in einem Histogramm 110 gesammelt und direkt im Anschluss die nächste Gruppe 56 ausgewertet wird. Dabei entsteht eventuell noch eine Pause für die Auswertung selbst.

Diese quasikontinuierliche Abtastung kann ausgenutzt werden, um die einleitend erläuterte Problematik von Teiltreffern zu lösen. Figur 8 zeigt ein beispielhaftes Testobjekt 58 der minimalen aufzulösenden Abmessungen bei einem herkömmlichen Laserscanner mit einem Einpulsverfahren. Um das Testobjekt 58 sicher aufzulösen, muss das Verhältnis des Abtastwinkels zu dem Durchmesser des Testobjekts 58 so gewählt sein, dass mehrere Abtaststrahlen 60 das Testobjekt 58 treffen. Das Testobjekt 58 wird dann je nach Anordnung gegenüber dem beispielsweise mit 0,5° aufgelösten Winkelraster wie in Figur 8a zweimal nur am Rand, dafür aber einmal vollständig, oder sogar wie in Figur 8b zweimal voll getroffen. Zusätzlich wird die Spotgeometrie des Lichtsenders 12 so gewählt, dass sich die Abtaststrahlen 60 überlappen und so Auflösungslücken vermeiden. In beiden Fällen wird gut die Hälfte der Sendeenergie für eine sichere Detektion an sich nicht benötigt.

Bei dem erfindungsgemäß eingesetzten statistischen Mehrpulsverfahren trifft auch auf ein Objekt, das nur die Mindestabmessungen aufweist, eine Vielzahl von Einzelpulsen. Jedes Empfangssignal wird dabei in dem Histogramm 110 zu den vorhergehenden Empfangssignalen addiert und nach einer gewissen Anzahl von Einzelpulsen eine Auswertung vorgenommen. Solange nur ein Histogrammspeicher 32a vorhanden ist, besteht daher die identische Problematik wie nach Figur 8. Es muss sichergestellt sein, dass eine ausreichende Anzahl von Einzelpulsen auf das minimale Testobjekt 58 treffen und somit für eine sichere Detektion in das zugehörige Histogramm 110 einfließen. Ein vollständiges, einem jeweiligen Messwert zugrunde gelegtes Histogramm 110 kann daher analog zu einem Abtaststrahl 60 gesehen werden. Somit ergeben die um entsprechende Winkel zueinander versetzten, nacheinander aufgezeichneten Histogramme 110 die gleiche Winkelauflösung wie bei einem Einpulsverfahren, wenn beispielsweise alle 0,5° ein neues Histogramm aufgezeichnet wird. Histogramme 110, bei denen nur ein Teil der ausgesandten Einzelpulse auf das Testobjekt 58 treffen, erreichen möglicherweise kein sicher auswertbares Signal/Rauschverhältnis, und deshalb werden solche Teiltreffer bei entsprechend schwacher Remission verworfen. Außerdem ist es nicht möglich, aufeinanderfolgende Histogramme 110 in nur einem Histogrammspeicher 32 für eine lückenlose Abdeckung zu überlappen, so wie man dies im Einpulsverfahren durch größere Strahlquerschnitte der Abtaststrahlen 60 erreichen kann.

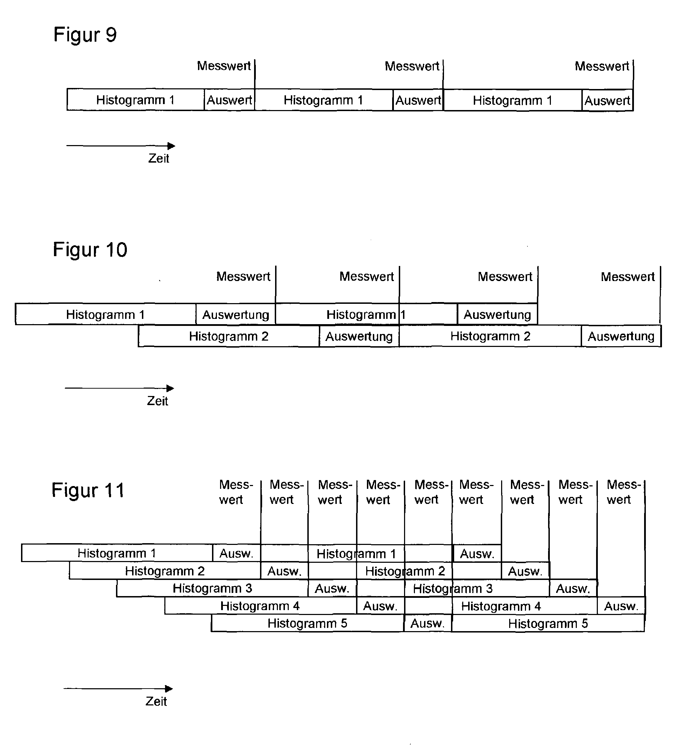

Hinzu kommt noch eine gewisse Blindzeit für die Auswertung selbst. Figur 9 zeigt hierzu schematisch den zeitlichen Ablauf, bei dem alternierend das Histogramm aufgezeichnet und ausgewertet wird. Während der Auswertung muss das Histogramm stabil bleiben, so dass in dem währenddessen überstrichenen Winkelausschnitt keine Empfangssignale berücksichtigt werden können.

Daraus wird deutlich, dass mindestens zwei durch eine Totzeit getrennte Histogramme 110 auf einem Testobjekt 58 platziert werden müssen, um es sicher zu detektieren. Bei gegebener fester Drehgeschwindigkeit und Pulswiederholfrequenz des Laserscanners 10 beschränkt dies die Statistiktiefe der Histogramme 110: Die Zeit, in welcher der Laserscanner 10 das Testobjekt 58 überstreicht, muss für die Aufzeichnung und Auswertung mindestens zweier aufeinanderfolgender Histogramme 110 ausreichen. Folglich kann weniger als die Hälfte der auf das Testobjekt 58 auftreffenden Energie für die Entfernungsbestimmung verwendet werden. Der energetische Verlust ist gegenüber einem herkömmlichen Einpulsverfahren nicht verbessert.

Deshalb werden erfindungsgemäß statt nur einem Histogrammspeicher zwei oder mehr Histogrammspeicher 32a, 32b implementiert, die zeitlich versetzt die Empfangssignale akkumulieren. Dadurch wird die Möglichkeit geschaffen, die maximale Statistiktiefe auszunutzen. Mit anderen Worten kann die Anzahl von Empfangssignalen in einem Histogramm 110 so gewählt werden, dass sie in etwa den Abmessungen des kleinsten zu detektierenden Objekts entspricht. In einem derartigen Histogramm 110 ist nahezu die gesamte vom Objekt remittierte Energie enthalten, und somit kann ein Entfernungswert mit optimaler Genauigkeit bestimmt werden.

Empfangssignale zu ein und demselben ausgesandten Einzelpuls werden somit in zwei oder mehr Histogrammen 110 verarbeitet. Die Auswertungseinheit 32 beziehungsweise der Logikbaustein, auf dem sie implementiert ist, muss hier neben dem Speicherplatz für die Histogrammspeicher 32a, 32b auch die notwendige erweiterte Logik bereitstellen.

Figur 10 zeigt analog zu Figur 9 den zeitlichen Ablauf bei Einsatz von zwei Histogrammspeichern 32a, 32b. Noch während Histogramm 1 in dem einen Histogrammspeicher 32a gesammelt wird, startet überlappend die Aufzeichnung von Histogramm 2 in dem anderen Histogrammspeicher 32b. Nach einem jeweiligen Auswertungszeitfenster stehen dann Messwerte mit insgesamt doppelter Frequenz beziehungsweise Winkelauflösung zur Verfügung. Als Beispiele für Zahlenwerte erfolgt eine jeweilige Aufzeichnung und Auswertung beider Histogramme über 0,25°, 0,5°, 1° oder mehr, während in jedem Histogramm einige zehn, hundert oder noch mehr Empfangssignale gesammelt werden.

Die Zeit, die für die Aufzeichnung eines einzelnen Histogramms zur Verfügung steht, wird durch den zusätzlichen Histogrammspeicher 32b deutlich erhöht. Trotz der größeren Statistiktiefe jedes einzelnen Messwerts werden pro Winkelschritt mehr Messwerte bereitgestellt, somit die Winkelauflösung gesteigert.

Um die Statistiktiefe und/oder die Anzahl der Messwerte weiter zu steigern, können auch mehr als zwei Histogramme in zusätzlichen Histogrammspeichern zeitversetzt aufgezeichnet werden. Figur 11 zeigt ein Beispiel mit fünf Histogrammspeichern. Die Anzahl und zeitliche Abfolge ist insofern ideal, als die Auswertungszeitfenster direkt ineinander übergehen, so dass die Logik der Auswertungseinheit 32 optimal genutzt wird. Echte Totzeiten gibt es nicht, da jederzeit eines oder sogar mehrere Histogramme 110 aktiv sind, um Empfangssignale zu sammeln. Die erfasste remittierte Energie ist maximiert und die geometrische Auflösung erheblich verfeinert.

Gemäß den oben erläuterten Austauschbeziehungen kann anstelle einer Erhöhung der geometrischen Auflösung der Spielraum auch dafür genutzt werden, die Pulsfrequenz herabzusetzen, um Augenschutzbedingungen zu erfüllen, oder um die Signalreserve und damit die Reichweite beziehungsweise die Fähigkeit zur Detektion schwach remittierender Ziele zu verbessern.

In Figur 11 wird gerade der Grenzfall gezeigt, wie mit nur einer seriellen Auswertung mehrere Histogramme 110 ausgewertet werden können. Es ist auch denkbar, die mehreren Histogrammspeicher 32a, 32b zu vollwertigen eigenständigen Auswertungskanälen zu erweitern. Damit können auch Messstrecken in einem Histogramm 110 aufgenommen werden, deren Auswertung längere Zeit in Anspruch nimmt als der zeitliche Versatz zwischen zwei Histogrammen. Plastisch auf die Figur 11 bezogen bedeutet dies, dass die Histogramme näher zueinander geschoben und die Auswertungsintervalle verlängert werden können, weil auch deren Überlappung durch parallele Auswertung in mehreren Auswertungskanälen möglich wird. Die Auswertungskanäle können, müssen aber nicht zwingend eineindeutig einem Histogrammspeicher 32a, 32b zugeordnet werden.

Mehrere Auswertungskanäle 32a-b lassen sich zusätzlich oder alternativ auch dafür verwenden, dieselben Messdaten in Form der Empfangspulse 102 parallel mehreren unterschiedlichen Auswertungen zu unterziehen. Dies dient bei redundanter oder diversitär-redundanter Auswertung einer Überprüfung der Verlässlichkeit der Auswertung. Darüber hinaus können aber auch in den Parallelzweigen unterschiedliche Kriterien an die Reichweite und Winkelauflösung angelegt werden. Somit wird beispielsweise zeitgleich eine Messung mit hoher Reichweite und geringer Winkelauflösung und eine Messung mit geringer Reichweite und hoher Winkelauflösung ausgeführt, und später wird die benötigte Messung ausgewählt oder es werden Messungen miteinander verglichen oder verrechnet.

Der gegenseitige Versatz der Histogramme ähnelt in gewisser Weise einem gleitenden Durchschnitt, bei dem zueinander versetzte Winkelskalen abgerastert und für eine verbesserte Winkelauflösung übereinander gelegt werden, Im Gegensatz zu einem gleitenden Durchschnitt muss aber kein Speicher für die Einzelmessungen verfügbar sein, um die jeweiligen Empfangssignale 102 bei fortgesetzter Scanbewegung aus dem Histogramm 110 zu entfernen, da jeweils ein Histogramm 110 je Histogrammspeicher 32a, 32b gesammelt, ausgewertet und dann verworfen wird.

Es ist aber auch denkbar, ein solches "floatendes Histogramm" zu realisieren. Ein solches Histogramm wird nicht nach jedem Messwert neu gestartet, sondern es wird das jeweils älteste Empfangssignal aus dem Histogramm entfernt und das aktuelle Empfangssignal hinzugefügt. Damit steht prinzipiell nach jedem ausgesandten Einzelpuls ein vollständig gefülltes Histogramm bereit, welches einen eigenen Messwert liefern kann. Praktisch würde man in der Regel nicht so oft auswerten, sondern nur nach jeweils mehreren Einzelpulsen, weil die Informationsbasis durch Austausch nur eines Empfangssignals zu ähnlich und die Anforderungen an die Rechenkapazitäten zu hoch sind.

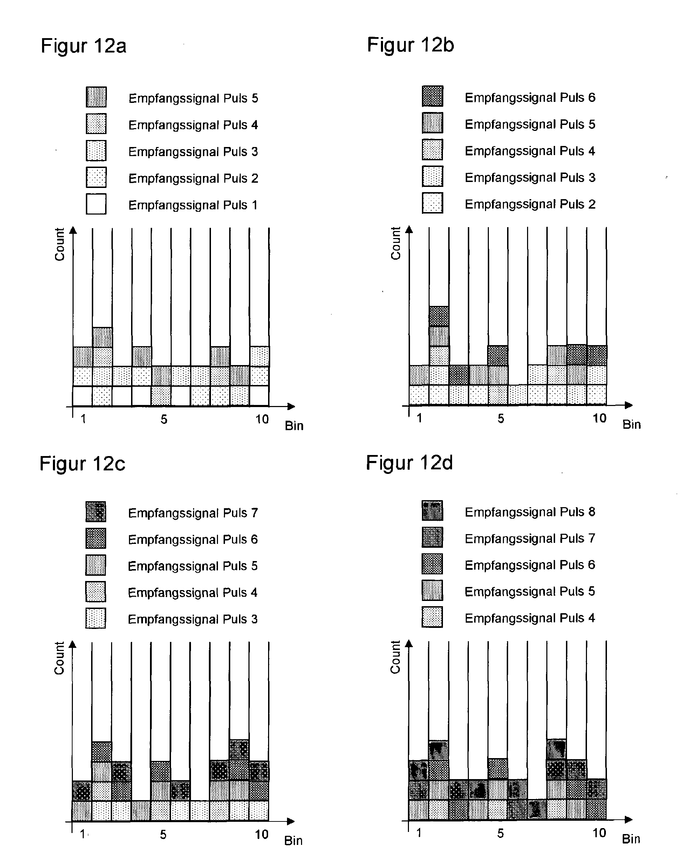

Figur 12 illustriert ein "floatendes" Histogramm. In Figur 12a sind die ersten fünf Empfangssignale in einem Histogramm gesammelt. Die Messinformation ist allein in der Amplitude enthalten, also der Anzahl Ereignisse (Count) je Messstreckenabschnitt (Bin). Dennoch sind die einzelnen Beiträge mit einem Muster gekennzeichnet, um die Zugehörigkeit zu dem Empfangssignal zu erhalten. Diese zusätzliche Information in Form eines Zugehörigkeitsdatums oder Zeitstempels ist erforderlich, um das jeweils älteste Empfangssignal aus dem Histogramm entfernen zu können.

Figur 12b zeigt das Histogramm, nachdem die Ereignisse zu dem ältesten Empfangssignal zu Puls 1 entfernt, die darüberliegenden Counts nach unten nachgerutscht und die Ereignisse des aktuellen Empfangssignals zu Puls 6 von oben nachgefüllt wurden. Somit wird rasch ein neues, aktuelles Histogramm erhalten. Die Figuren 12c und 12d zeigen noch zwei analoge nachfolgende Schritte, bei denen das Empfangssignal zu Puls 2 durch das Empfangssignal zu Puls 7 beziehungsweise das Empfangssignal zu Puls 3 durch das Empfangssignal zu Puls 8 ersetzt wurde.

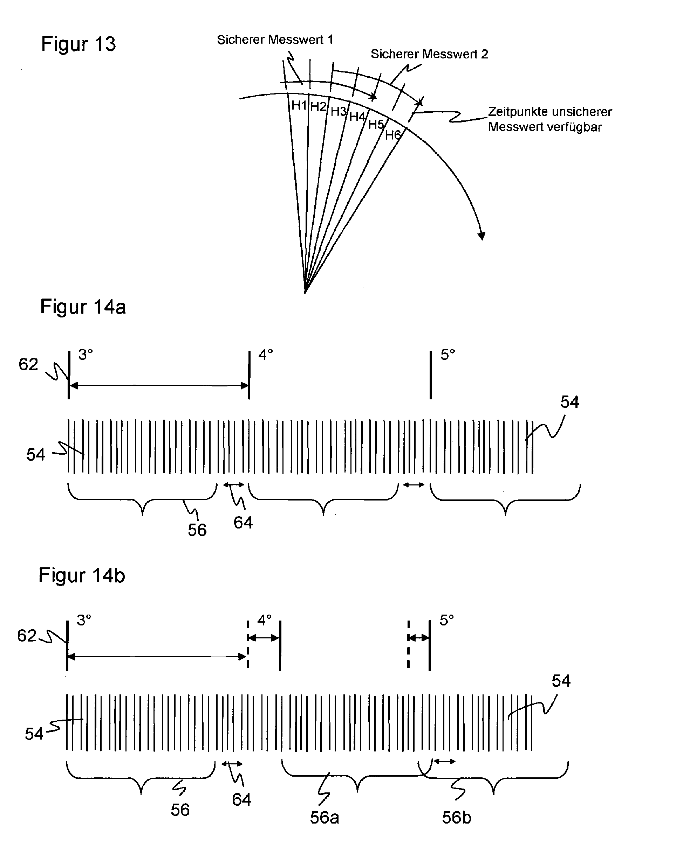

Zur Erfassung eines sicheren Messwerts sind zumeist Histogramme mit einer gewissen Statistiktiefe erforderlich. Andererseits enthalten aber auch Histogramme auf Basis von weniger Empfangssignalen oft schon eine nützliche, wenn auch nicht sichere Messinformation. Figur 13 zeigt eine schematische Darstellung zu einer weiteren Ausführungsform, welche diese Messinformation nutzbar macht. Die Darstellung verwendet zur besseren Übersicht gegenüber der praktischen Anwendung deutlich zu große Winkel.

Die in Figur 13 schematisch über ihren zugehörigen Winkelbereich dargestellten Histogramme H1...H6 werden mit einer relativ geringen Statistiktiefe ausgewertet, so dass beispielsweise schon mit 0,1° Winkelauflösung nicht sichere Messwerte verfügbar sind. Damit werden auch Objekte aufgelöst, die kleiner sind als die in der Sicherheitstechnik geforderten Mindestabmessungen von 30 mm, 50 mm oder 70 mm, oder eine Umgebungskarte für die Navigation eines führerlosen Transportsystems wird mit einem feineren Punktraster erstellt. Voraussetzung ist, dass genügend Energie der ausgesandten Einzelpulse remittiert wurde. Die meisten realen Objekte sind aber heller als die in den Sicherheitsnormen geforderte Remission von nur 2%. Solange also keine sichere Detektion in diesem Sinne gefordert ist, können auch Messwerte mit hoher Winkelauflösung bereitgestellt werden, oder solche Messwerte werden zusätzlich zu den sicheren Messwerten ausgegeben.

Um dennoch auch die sichere Detektion zu gewährleisten, werden die Histogramme H1... H6 nicht nur einzeln ausgewertet, sondern zusammengefasst, bis ein solches Sammelhistogramm die erforderliche Statistiktiefe aufweist, um beispielsweise auch den dunklen Prüfstab bei der Abnahme eines Sicherheitslaserscanners zu erkennen.

Diese Zusammenfassung kann je nach Anzahl der vorhandenen Histogrammspeicher unterschiedlich erfolgen. Stehen genügend Histogrammspeicher bereit, werden die einzelnen Histogramme H1...H6 gespeichert und dann rollierend ausgewertet, beispielsweise H1+H2+H3+H4 für den ersten sicheren Messwert, H2+H3+H4+H5 für den zweiten sicheren Messwert und so weiter. Dann kann die Ausgabe sicherer Messwerte genauso häufig erfolgen wie die Ausgabe nicht sicherer Messwerte. Es genügt aber auch nur ein Histogrammspeicher für die nicht sicheren Messwerte und je ein weiterer Histogrammspeicher je überlappend auswertbarem sicherem Messwert. Zu diesen Histogrammspeichern wird dann jeweils ein einzelnes Histogramm H1... H6 hinzuaddiert und anschließend verworfen.

Bei der anhand von Figur 13 erläuterten Ausführungsform ist es möglich, zwei unterschiedliche Winkelauflösungen zu spezifizieren, beispielsweise 0,1° für die nicht sicheren Messwerte und 0,5° für die sicheren Messwerte.

Mit den bisher beschriebenen Ausführungsformen wird im Prinzip ein lückenlos scannendes System aufgebaut, das bei keinem Scanwinkel eine Scanlücke zeigt. Je nach Einsatzbedingungen ist der Laserscanner 10 aber mehr oder weniger großen Drehzahlschwankungen ausgesetzt, beispielsweise durch Erschütterungen oder Rütteln. Dann kann es passieren, dass bereits die Auswertung für einen neuen Messwert mit einem neuen Histogramm 110 beginnen müsste, ehe die aktuelle Messung abgeschlossen ist. Diese Betrachtung gilt je Histogrammspeicher, da für eine sichere Anwendung nicht unbedingt genügt, wenn die Drehzahlschwankung allein durch einen anderen Histogrammspeicher abgefangen wird.

Figur 14 illustriert die Situation. Figur 14a zeigt einen Idealfall ohne Drehzahlschwankung. Die Winkelmesseinheit 30 liefert gleichmäßige, äquidistante Winkelpositionssignale 62, und die Einzellichtpulse 54 beziehungsweise deren zugehörige Empfangspulse 102 werden überschneidungsfrei in Gruppen 56 zusammengefasst. Die Pfeile 64 bezeichnen das Totzeitintervall, das für die Auswertung des Histogramms 110 benötigt wird. In Figur 14b gerät das Zeitverhalten aufgrund einer Drehzahlschwankung durcheinander. Die Gruppe 56a bei 4° sammelt noch Einzellichtpulse 54, die eigentlich bereits der Gruppe 56b bei 5° zugehören.

Eine mögliche Ursache für derartige Fehlzuordnungen liegt in einer zu geringen physischen Auflösung der Winkelmesseinrichtung 30, etwa bei Verwendung einer Strichscheibe. Die Winkelpositionssignale für die gewünschte Winkelauflösung müssen dann interpoliert werden und stehen nicht in Echtzeit zur Verfügung.

Damit wird bisweilen erst im Nachhinein klar, dass Empfangspulse 102 fälschlich noch in dem früheren Histogramm 110 gesammelt wurden. Ein einfacher Ausweg besteht darin, die Auswertung zu verzögern, also sämtliche Empfangspulse 102 zunächst nur als solche zwischenzuspeichern und erst im Nachhinein zu gruppieren und statistisch auszuwerten. Dadurch entsteht aber zusätzlicher Speicheraufwand, und die Echtzeitmessfähigkeit geht verloren. Ein anderer Ausweg wäre, den Messwert zu verwerfen, wenn sich herausstellt, dass das Histogramm 110 bereits Empfangspulse 102 des nachfolgenden Winkelbereichs enthält. Dabei entstehen dann aber Scanlücken.

Deshalb ist in einer erfindungsgemäßen Ausführungsform eine dynamische Anpassung der Statistiktiefe vorgesehen. In einer ganz einfachen Implementierung wird jede Gruppe abgeschlossen, wenn ein neues Winkelpositionssignal 62 eintrifft, unabhängig von der damit erreichten Statistiktiefe. Gemäß der oben erläuterten Austauschbeziehung resultiert hieraus letztlich eine Reichweitenschwankung in Abhängigkeit des Winkels, die aber häufig eher hinnehmbar ist als eine Scanlücke.

Für gewöhnlich wird man aber eine Reichweite und damit eine Statistiktiefe vorgeben wollen. Mit anderen Worten ist die Anzahl der Einzellichtpulse 54 und damit der zugehörigen Empfangspulse 102 je Gruppe 56 vorab festgelegt. Diese Vorgabe kann, wie oben schon ausgeführt, durchaus dynamisch sein, also mit dem Winkelbereich beziehungsweise mit der Zeit variieren.

Um Drehzahlschwankungen auszugleichen, wird dann in einer weiteren Ausführungsform ein Reservepuffer vorgehalten. Zwischen je zwei Gruppen 56 wird ein vergrößerter Bereich ähnlich der Totzone 64 vorgehalten, in dem im Idealfall der Figur 14a dem Histogramm 110 keine Empfangspulse 102 hinzugefügt werden. Tritt dann eine Drehzahlschwankung auf, so wird die der Reservepuffer verwendet, um die vorgegebene Anzahl von Empfangspulsen 102 noch vor dem nächsten Winkelpositionssignal 62 zu erreichen. Damit entfernt sich das Verfahren umso weiter von der quasikontinuierlichen Auswertung, je größer der Reservepuffer gewählt ist.

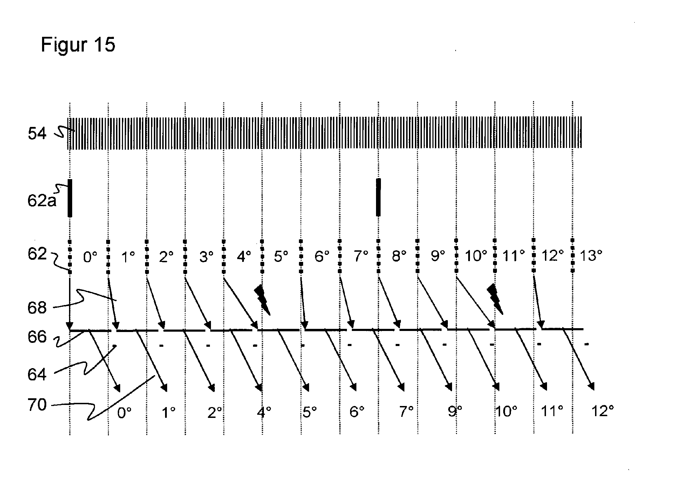

Figur 15 zeigt eine weitere Ausführungsform der Erfindung, die einsetzbar ist, um den Reservepuffer zu vermeiden und/oder für den Fall vorzusorgen, dass der Reservepuffer nicht ausreicht, um Drehzahlschwankungen aufzufangen. Wie schon in Figur 14 ist im oberen Teil der Figur 15 die zeitliche Abfolge der Einzellichtpulse 54 gezeigt. Darunter sind die von der Winkelmesseinheit 30 erzeugten Winkelsignale 62a dargestellt, aus denen durch Interpolation die Winkelpositionssignale 62 mit der gewünschten Winkelauflösung abgeleitet werden. Alternativ kann die Winkelmesseinheit 30 unmittelbar ein gewünschtes Winkelraster mit Winkelpositionssignalen 62 liefern.

Unkritisch ist, wenn eine Zeitspanne 66 zum Sammeln einer vorgegebenen Anzahl von Empfangspulsen 102 einschließlich der Totzeit 64 für die Auswertung kleiner ist als das Zeitintervall zwischen zwei Winkelpositionssignalen 62. Dann wird ein Messwert erzeugt und für den nächsten Messwert auf das nächste Winkelpositionssignal 62 gewartet.

Dargestellt in Figur 15 ist aber der Fall, bei dem aufgrund einer Drehzahlschwankung die Zeitintervalle zwischen zwei Winkelpositionssignalen 62 nicht genügen, um darin die erforderliche Anzahl von Empfangspulsen 102 in einem Histogramm 110 zu sammeln. Dann wird unmittelbar im Anschluss an eine Messung sofort die nächste Messung gestartet. Das kann das zeitliche Auseinanderlaufen nicht verhindern, grenzt es aber zumindest ein. Der Beginn einer jeden Messung wird durch Pfeile 68 illustriert. Ein Messwert wird dann nachträglich demjenigen Winkelsegment zugeordnet, in dem die Mehrheit, insbesondere mehr als 50% der Einzellichtpulse 54 beziehungsweise der zugehörigen Empfangspulse 102 liegt. Dies wird durch weitere Pfeile 70 gezeigt. Somit muss hier nicht nur der Messwert, sondern auch der zugehörige Winkel als Ausgabewert übertragen werden.

Folgen mehrere verkürzte Winkelsegmente aufeinander, dann kann es Winkelpositionssignale 62 geben, die gar keine neue Messung auslösen, weil die vorherige Messung noch das gesamte verfügbare Zeitbudget aufbraucht. Dies ist in dem Beispiel der Figur 8 bei 5° und bei 11° der Fall. Für diese Winkelpositionssignale 62 stehen zunächst keine Messwerte zur Verfügung. Die Messwerte können aber bei Bedarf von den benachbarten Winkelpositionssignalen 62 interpoliert werden. Die kontinuierliche und lückenlose Überwachung bleibt sichergestellt, weil Einzellichtpulse 54 zu jedem Zwischenwinkel in die Messung eingeflossen sind. Es hat dabei weiterhin, bezogen auf die reale Ausleuchtung mit dem Sendelichtstrahl 16, eine quasi-kontinuierliche Abtastung stattgefunden. Die Pulsfolge der Einzellichtpulse 54 gegenüber dem Drehwinkel war aber aufgrund der plötzlichen Drehzahlerhöhung langsamer angelegt als notwendig gewesen wäre, so dass effektiv die Winkelauflösung temporär absinkt.

Die messtechnisch präziseste Auswertung besteht darin, zusätzliche Histogrammspeicher 32a-b beziehungsweise Auswertungskanäle auch zum Abfangen solcher Drehzahlschwankungen zu verwenden. Zu beachten ist, dass dies mehr Histogrammspeicher erfordert als das oben betrachtete versetzte Sammeln von Histogrammen, denn die Drehzahlschwankungen sind ein zusätzlicher Effekt, der auch den Zeitbezug der versetzten Histogrammaufzeichnung durcheinander bringen kann. Um die Drehzahlschwankungen auszugleichen, setzt ein Auswertungskanal erforderlichenfalls seine Histogrammerzeugung auch über ein weiteres Winkelpositionssignal 62 hinweg fort, während überlappend ein zusätzlicher Auswertungskanal bereits eine weitere Messung mit dem weiteren Winkelpositionssignal 62 als Startsignal beginnt. Die Statistiktiefe und somit die Reichweite und die Winkelauflösung bleiben dann gänzlich unberührt von Drehzahlschwankungen. Lediglich die Unabhängigkeit der Messwerte ist geringfügig beeinflusst, weil Empfangspulse 102 im Überschneidungsbereich nach dem weiteren Winkelpositionssignal 58 doppelt in den früheren und den späteren Messwert einfließen. Dies hat aber keine praktischen Auswirkungen, weil dennoch sämtliche Empfangspulse 102 aus realen Messungen bei dem zugehörigen Erfassungswinkel stammen.

Als Ausgangszustand des Histogramms 110 wurde in den bisher beschriebenen Ausführungsformen zumindest implizit angenommen, dass alle Bins leer sind. Hiervon kann auch gezielt abgewichen und das Histogramm 110 mit Vorladewerten vorbelegt werden. Dabei sind sowohl winkelunabhängige als auch winkelabhängige Vorladewerte denkbar.

Eine Anwendung besteht in einer Unterdrückung eines Frontscheibenreflexes, den der Sendelichtstrahl 16 beim Austritt aus dem Laserscanner 10 durch die Frontscheibe 38 erzeugt. Analog können aber auch andere Störeinflüsse wie optisches oder elektrisches Übersprechen kompensiert werden. Schließlich ist prinzipiell gerade bei statischen Anwendungen auch denkbar, eine Referenzszene durch Vorladewerte einzulernen, um dann im Betrieb besonders schnell und empfindlich auf Bewegungen oder zusätzliche Objekte zu reagieren.

Dazu werden diese Störungen in Kalibriermessungen mit der späteren Winkelauflösung ab Werk oder am Einsatzort eingelernt und die dabei gemessenen Vorladewerte anschließend im Betrieb mit negativem Vorzeichen bei Bilden eines jeden neuen Histogramms in dessen Bins vorbelegt. Dabei sollte eine Skalierung anhand der beim Einlernen und der im Betrieb verwendeten Statistiktiefe erfolgen. Vorteilhafterweise werden die Vorladewerte bereits mit der späteren Statistiktiefe eingelernt, aber dies ist wegen der adaptiven Elemente der Erfindung nicht immer möglich.

Wenn nun die Empfangspulse 102 in dem derart vorbelegten Histogramm 110 gesammelt werden, so wird aufgrund der Vorladewerte die eingelernte bekannte Störung automatisch und zu einem sehr frühen Zeitpunkt im Messpfad kompensiert.

Obwohl die Erfindung anhand von Figuren und Ausführungsbeispielen beschrieben ist, umfasst sie auch deren Kombinationsmöglichkeiten.

## Patentansprüche

1. Laserscanner (10) zur Erfassung und Abstandsbestimmung von Objekten in einem Überwachungsbereich (20) mit einem Lichtsender (12) zum Aussenden eines Sendelichtstrahls (16) mit einer Vielzahl aufeinanderfolgender Einzellichtpulse, einer drehbaren Ablenkeinheit (18) zur periodischen Ablenkung des Sendelichtstrahls (16) in den Überwachungsbereich (20), einer Winkelmesseinheit (30) zur Erzeugung von Winkelpositionssignalen (62) in Abhängigkeit von einer Winkelstellung der Ablenkeinheit (18), einem Lichtempfänger (26) zum Erzeugen von Empfangssignalen aus dem von Objekten in dem Überwachungsbereich (20) remittierten oder reflektierten Sendelicht (22), einem ersten Histogrammspeicher (32a) mit einer Vielzahl von Speicherplätzen, in denen jeweils ein Abschnitt der Empfangssignale aufakkumulierbar ist, und mit einer Auswertungseinheit (32), welche dafür ausgebildet ist, in einem dem ersten Histogrammspeicher (32a) entnommenen ersten Histogramm (110) einen zu einem Objekt gehörigen Empfangspuls zu identifizieren und daraus mittels eines Lichtlaufzeitverfahrens den Abstand des Objekts zu bestimmen, wobei das erste Histogramm (110) über ein Zeitintervall gesammelt ist, das einem Winkelbereich entsprechenden Winkelpositionssignal (62) zugeordnet ist,
**dadurch gekennzeichnet,**
**dass** mindestens ein zweiter Histogrammspeicher (32b) mit einer Vielzahl von Speicherplätzen vorgesehen ist, in denen jeweils ein Abschnitt der Empfangssignale aufakkumulierbar ist, um das erste Histogramm und ein dem zweiten Histogrammspeicher (32b) entnommenes zweites Histogramm in überlappenden Zeitintervallen zu sammeln, und dass der Laserscanner (10) als Sicherheitsscanner mit einem Sicherheitsausgang (34) ausgebildet ist, bei dem die Auswertungseinheit (32) dafür ausgebildet ist, unzulässige Eingriffe in Schutzfelder innerhalb des Überwachungsbereichs (20) zu erkennen und daraufhin ein sicherheitsgerichtetes Abschaltsignal an dem Sicherheitsausgang (34) auszugeben.

2. Laserscanner (10) nach Anspruch 1,
wobei die Auswertungseinheit (32) für eine Bestimmung und Ausgabe von Objektabständen in Echtzeit ausgebildet ist.

3. Laserscanner (10) nach Anspruch 1 oder 2,
wobei die Drehung der Ablenkeinheit (18) in durch eine Winkelauflösung des Laserscanners (10) vorgegebene Winkelabschnitte (62) unterteilt ist, und wobei in der Auswertungseinheit (32) für jeden Winkelabschnitt (62) ein erstes Zeitfenster zum Sammeln eines Histogramms und ein darauffolgendes zweites Zeitfenster zur Auswertung des Histogramms vorgesehen ist.

4. Laserscanner (10) nach einem der vorhergehenden Ansprüche,
wobei die Auswertungseinheit (32) mindestens zwei Auswertungskanäle (32a, 32b) aufweist, in denen Histogramme aus einem der Histogrammspeicher auswertbar sind.

5. Laserscanner (10) nach einem der vorhergehenden Ansprüche,
wobei der Histogrammspeicher (32a, 32b) dafür ausgebildet ist, zu jedem aufakkumulierten Abschnitt eines Empfangssignals einen Zeitstempel zu speichern und jeweils rollierend bei Hinzunahme eines weiteren Empfangssignals das älteste Empfangssignal zu löschen.

6. Laserscanner (10) nach einem der vorhergehenden Ansprüche,
wobei die Auswertungseinheit (32) dafür ausgebildet ist, Histogramme (110) mehrerer Histogrammspeicher (32a, 32b) in einem Histogrammspeicher (32a, 32b) zusammenzufassen.

7. Laserscanner (10) nach einem der vorhergehenden Ansprüche,
wobei mindestens ein A/D-Wandler (52) vorgesehen ist, um Empfangssignale zum Aufakkumulieren in den Histogrammspeichern (32a, 32b) zu digitalisieren, wobei insbesondere der A/D-Wandler (52) ein Binarisierer ist und die Speicherplätze als Zähler ausgebildet sind.

8. Laserscanner (10) nach einem der vorhergehenden Ansprüche,
wobei die Histogrammspeicher(32a, 32b), die Auswertungseinheit (32) und der A/D-Wandler (32) auf einem gemeinsamen digitalen Logikbaustein (38) implementiert sind, insbesondere einem FPGA.

9. Laserscanner (10) nach einem der vorhergehenden Ansprüche,
wobei ein analoger Vorverarbeiter (44) vorgesehen ist, der einen Filter (48) aufweist, um jeweils den Empfangspuls (102) zu einem bipolaren vorverarbeiteten Signal (104) umzuwandeln und über einen A/D-Wandler (52) der Auswertungseinheit (32) zuzuführen, wobei insbesondere der analoge Vorverarbeiter (44) einen Begrenzungsverstärker (50) zur Verstärkung des positiven bzw. negativen Anteils des Signals (104) bis auf einen Sättigungswert aufweist und der A/D-Wandler (52) ein Binarisierer ist.

10. Verfahren zur Erfassung und Abstandsbestimmung von Objekten in einem Überwachungsbereich (20), bei dem ein Sendelichtstrahl (16) mit einer Vielzahl aufeinanderfolgender Einzellichtpulse ausgesandt wird, der Sendelichtstrahl (16) den Überwachungsbereich (20) durch periodisches Ablenken abtastet, der Winkel der Abtastung durch ein Winkelpositionssignal (62) festgestellt wird und aus dem von Objekten in dem Überwachungsbereich (20) remittierten oder reflektierten Sendelicht (22) Empfangssignale erzeugt werden, wobei in einem ersten Histogrammspeicher (32a) mit einer Vielzahl von Speicherplätzen jeweils ein Abschnitt der Empfangssignale aufakkumuliert, aus einem dem Histogrammspeicher (32a) entnommenen ersten Histogramm (110) ein zu einem Objekt gehöriger Empfangspuls identifiziert und daraus mittels eines Lichtlaufzeitverfahrens der Abstand des Objekts bestimmt wird, wobei das erste Histogramm (110) über ein Zeitintervall gesammelt wird, das einem einem Winkelbereich entsprechendem Winkelpositionssignal (62) zugeordnet ist,
**dadurch gekennzeichnet,**
**dass** in einem zweiten Histogrammspeicher (32b) mit einer Vielzahl von Speicherplätzen jeweils ein Abschnitt der Empfangssignale aufakkumuliert wird, dass das erste Histogramm und ein dem zweiten Histogrammspeicher (32b) entnommenes zweites Histogramm in überlappenden Zeitintervallen gesammelt werden und dass für eine Anwendung in der Sicherheitstechnik unzulässige Eingriffe in Schutzfelder innerhalb des Überwachungsbereichs (20) erkannt werden und daraufhin ein sicherheitsgerichtetes Abschaltsignal an einem Sicherheitsausgang (34) ausgegeben wird.

11. Verfahren nach Anspruch 10,
wobei die periodische Abtastung in durch eine Winkelauflösung vorgegebene Winkelabschnitte (62) unterteilt ist, und wobei in jedem Winkelabschnitt (62) in einem ersten Zeitfenster ein Histogramm (110) gesammelt und in einem darauffolgenden zweiten Zeitfenster das Histogramm (110) ausgewertet wird.

12. Verfahren nach Anspruch 10 oder 11,
wobei mehrere Histogramme (110) in mindestens zwei Auswertungskanälen (32a, 32b) ausgewertet werden.

13. Verfahren nach einem der Ansprüche 10 bis 12,
wobei zu jedem aufakkumulierten Abschnitt eines Empfangssignals ein Zeitstempel gespeichert und jeweils rollierend bei Hinzunahme eines weiteren Empfangssignals das älteste Empfangssignal gelöscht wird.

14. Verfahren nach einem der Ansprüche 10 bis 13,
wobei Histogramme zunächst in mehreren Histogrammspeichern (32a, 32b) gesammelt und dann in einem Histogrammspeicher (32a, 32b) zusammengefasst werden.

## Claims

1. A laser scanner (10) for the detection and determination of distances of objects in a monitoring zone (20), comprising
a light transmitter (12) for the transmission of a transmission light beam (16) having a plurality of consecutive individual light pulses;
a rotatable deflection unit (18) for the periodic deflection of the transmission light beam (16) into the monitoring zone (20);
an angular measurement unit (30) for the generation of angular position signals (62) in dependence on an angular position of the deflection unit (18);
a light receiver (26) for the generation of received signals from the transmission light (22) remitted or reflected from objects in the monitoring zone (20);
a first histogram memory (32a) having a plurality of memory spaces in which respectively a section of the received signal can be accumulated; and an evaluation unit (32) which is configured to identify a received pulse associated with an object in a first histogram (110) taken from the first histogram memory (32a) and therefrom to determine the distance of the object by means of a light time of flight method, wherein the first histogram (110) is collected over a time interval which is associated with an angular position signal (62) corresponding to an angular section,
**characterized in that** at least a second histogram memory (32b) having a plurality of memory spaces in which respectively a section of the received signal can be accumulated is provided in order to accumulate the first histogram and a second histogram taken from the second histogram memory (32b) in overlapping time intervals, and **in that** the laser scanner (10) is configured as a safety scanner having a secure output (34), wherein the evaluation unit (32) is configured to recognize inadmissible intrusions into protective fields within the monitoring zone (20) and thereupon to output a safety-related shut-down signal at the secure output (34).

2. The laser scanner (10) in accordance with claim 1,
wherein the evaluation unit (32) is configured for a determination and output of object distances in real time.

3. The laser scanner (10) in accordance with claim 1 or 2,
wherein the rotation of the deflection unit (18) is divided into angular sections (62) predefined by an angular resolution of the laser scanner (10), and wherein a first time window for collecting a histogram and a consecutive second time window for evaluating the histogram are provided in the evaluation unit (32) for each angular section (62).

4. The laser scanner (10) in accordance with any of the preceding claims,
wherein the evaluation unit (32) has at least two evaluation channels (32a, 32b) in which histograms from one of the histogram memories can be evaluated.

5. The laser scanner (10) in accordance with any of the preceding claims,
wherein the histogram memory (32a, 32b) is configured to store a time stamp for each accumulated section of a received signal and to respectively delete the oldest received signal in a rolling manner on the addition of a further received signal.

6. The laser scanner (10) in accordance with any of the preceding claims,
wherein the evaluation unit (32) is configured to combine histograms (110) of a plurality of histogram memories (32a, 32b) in a histogram memory (32a, 32b).

7. The laser scanner (10) in accordance with any of the preceding claims, further comprising at least one analog-to-digital converter (52) in order to digitize received signals for accumulation in the at least two histogram memories (32a, 32b), wherein in particular the analog-to-digital converter (52) is a binarizer and the memory spaces are configured as counters.

8. The laser scanner (10) in accordance with any of the preceding claims,
wherein the histogram memories (32a, 32b), the evaluation unit (32) and the analog-to-digital converter (52) are implemented on a common digital logic module (38), in particular an FPGA.

9. The laser scanner (10) in accordance with any of the preceding claims, further comprising an analog preprocessor (44) which has a filter (48) in order to respectively transform a received pulse (102) to a bipolar preprocessed signal (104) and to supply this to the evaluation unit (32) via an analog-to-digital converter (52), wherein in particular the analog preprocessor (44) has a limiting amplifier (50) for amplifying a positive and/or negative portion of the signal (104) to a saturation value and the analog-to-digital converter (52) is a binarizer.

10. A method for the detection and determination of distances of objects in a monitoring zone (20), wherein a transmission light beam (16) having a plurality of consecutive individual pulses is transmitted, the transmission light beam (16) scans the monitoring zone (20) by periodic deflection, the angle of the scanning is determined by an angular position signal (62), and received signals are generated from transmission light (22) remitted or reflected from objects in the monitoring zone (20), wherein a respective section of the received signal is accumulated in a first histogram memory (32a) having a plurality of memory spaces, a received pulse associated with an object is identified in a first histogram (110) taken from the first histogram memory (32a), and the distance of the object is determined therefrom by means of a light time of flight method, wherein the first histogram (110) is collected over a time interval which is associated with an angular position signal (62) corresponding to an angular section,
**characterized in that** a respective section of the reception signal is accumulated in a second histogram memory (32b) having a plurality of memory spaces, **in that** the first histogram and a second histogram taken from the second histogram memory (32b) are accumulated in overlapping time intervals, and **in that** for an application in safety technology inadmissible intrusions into protective fields within the monitoring zone (20) are recognized and thereupon a safety-related shut-down signal is output at a secure output (34).

11. The method in accordance with claim 10,
wherein the periodic scanning is divided into angular sections (62) provided by an angular resolution, and wherein in each angular section (62) a histogram (110) is accumulated in a first time window and the histogram (110) is evaluated in a second consecutive time window.

12. The method in accordance with claim 10 or 11,
wherin a plurality of histograms (110) are evaluated in at least two evaluation channels (32a, 32b).

13. The method in accordance with any of claims 10 to 12,
wherein a time stamp for each accumulated section of a received signal is stored and the respective oldest received signal is deleted in a rolling manner on addition of a further received signal.

14. The method in accordance with any of claims 10 to 13,
wherein histograms are initially collected in a plurality of histogram memories (32a, 32b) and are then combined in one histogram memory (32a, 32b).

## Revendications

1. Scanner à laser (10) pour la détection et la détermination de distance d'objets dans une zone surveillée (20), comprenant un émetteur de lumière (12) pour émettre un faisceau de lumière émise (16) avec une pluralité d'impulsions de lumière individuelles successives, une unité de déflexion rotative (18) pour défléchir périodiquement le faisceau de lumière émise (16) vers la zone surveillée (20), une unité de mesure angulaire (30) pour engendrer des signaux de position angulaire (62) en dépendance d'une position angulaire de l'unité de déflexion (18), un récepteur de lumière (26) pour engendrer des signaux de réception à partir de la lumière émise (22) qui a été réémise ou réfléchie depuis des objets dans la zone surveillée (20), une première mémoire d'histogramme (32a) avec une pluralité d'emplacements de mémoire dans lesquels il est possible d'accumuler respectivement une portion du signal de réception, et comprenant une unité d'évaluation (32) qui est réalisée pour identifier, dans un premier histogramme (110) prélevé dans la première mémoire d'histogramme (32a), une impulsion de réception appartenant à un objet et pour déterminer à partir de cela la distance de l'objet au moyen d'un procédé à temps de parcours de la lumière, dans lequel le premier histogramme (110) est recueilli sur un intervalle temporel qui est associé à un signal de position angulaire (82) correspondant à une plage angulaire,
**caractérisé en ce que**
il est prévu au moins une seconde mémoire d'histogramme (32b) avec une pluralité d'emplacements de mémoire dans lesquels il est possible d'accumuler respectivement une portion du signal de réception, afin de recueillir le premier histogramme et un second histogramme prélevé de la seconde mémoire d'histogramme (32b) dans des intervalles temporels qui se chevauchent, et **en ce que** le scanner à laser (10) est réalisé sous forme de scanner de sécurité avec une sortie de sécurisation (34), dans lequel l'unité d'évaluation (32) est réalisée pour reconnaître des interventions inadmissibles dans des champs de protection à l'intérieur de la zone surveillée (20) est pour délivrer suite à cela à la sortie de sécurisation (34) un signal de coupure à vocation de sécurité.

2. Scanner à laser (10) selon la revendication 1,
dans lequel l'unité d'évaluation (32) est réalisée pour la détermination et la fourniture de distances d'objets en temps réel.

3. Scanner à laser (10) selon la revendication 1 ou 2,
dans lequel la rotation de l'unité de déflexion (18) est subdivisée en portions angulaires (62) imposées par une résolution angulaire du scanner à laser (10), et dans lequel il est prévu dans l'unité d'évaluation (32) pour chaque portion angulaire (62) une première fenêtre temporelle pour recueillir un histogramme et une seconde fenêtre temporelle successive pour évaluer l'histogramme.

4. Scanner à laser (10) selon l'une des revendications précédentes,
dans lequel l'unité d'évaluation (32) comprend au moins deux canaux d'évaluation (32a, 32b), dans lesquels des histogrammes provenant de l'une des mémoires d'histogramme peuvent être évalués.

5. Scanner à laser (10) selon l'une des revendications précédentes,
dans lequel la mémoire d'histogramme (32a, 32b) est réalisée pour mémoriser une étiquette temporelle pour chaque portion accumulée d'un signal de réception, et pour effacer respectivement par roulement le signal de réception le plus ancien lors de la prise d'un autre signal de réception.

6. Scanner à laser (10) selon l'une des revendications précédentes,
dans lequel l'unité d'évaluation (32) est réalisée pour regrouper des histogrammes (110) de plusieurs mémoires d'histogrammes (32a, 32b) dans une mémoire d'histogramme (32a, 32b).

7. Scanner à laser (10) selon l'une des revendications précédentes, dans lequel
dans lequel il est prévu au moins un convertisseur A/N (52) afin de numériser des signaux de réception destinés à être accumulés dans les mémoires d'histogrammes (32a, 32b), et le convertisseur A/N (52) est en particulier un convertisseur binaire, et les emplacements de mémoire sont réalisés sous forme de compteurs.

8. Scanner à laser (10) selon l'une des revendications précédentes,
dans lequel les mémoires d'histogrammes (32a, 32b), l'unité d'évaluation (32) et le convertisseur A/N (32) sont réalisés sur un composant logique numérique commun (38), en particulier un FPGA.

9. Scanner à laser (10) selon l'une des revendications précédentes,
dans lequel il est prévu un circuit de prétraitement analogique (44) qui comprend un filtre (48) afin de convertir chacune des impulsions de réception (102) en un signal prétraité bipolaire (104) et de l'admettre à l'unité d'évaluation (32) via un convertisseur A/N (52), dans lequel le circuit de prétraitement analogique (44) comprend en particulier un amplificateur-limiteur (50) pour amplifier la part positive ou négative du signal (104) jusqu'à une valeur de saturation, et le convertisseur A/N (52) est un convertisseur binaire.

10. Procédé pour la détection et la détermination de distances d'objets dans une zone surveillée (20), dans lequel on émet un rayon de lumière émise (16) avec une pluralité d'impulsions de lumière individuelles successives, le rayon de lumière émise (16) palpe la zone surveillée (20) grâce à une déflexion périodique, on constate l'angle de palpage par un signal de position angulaire (62) et, à partir de la lumière émise (22) qui a été réémise ou réfléchie par des objets dans la zone surveillée (20), on engendre des signaux de réception, dans lequel on accumule respectivement une portion du signal de réception dans une première mémoire d'histogramme (32a) avec une pluralité d'emplacements de mémoire, on identifie, à partir d'un premier histogramme (110) prélevé de la mémoire d'histogramme (32a), une impulsion de réception appartenant à un objet et on détermine à partir de cela la distance de l'objet au moyen d'une procédure à temps de parcours de la lumière, et dans lequel on collecte le premier histogramme (110) sur un intervalle temporel qui est associé à un signal de position angulaire (62) correspondant à une plage angulaire,
**caractérisé en ce que**
on accumule respectivement une portion du signal de réception dans une seconde mémoire d'histogramme (32b) avec une pluralité d'emplacements de mémoire, **en ce que** l'on collecte le premier histogramme et un second histogramme prélevé de la seconde mémoire d'histogramme (32b) dans des intervalles temporels qui se chevauchent, et **en ce que** l'on reconnaît, pour une application relevant des techniques de sécurité, des interventions inadmissibles dans des champs de protection à l'intérieur de la zone surveillée (20) et l'on délivre suite à cela à une sortie de sécurisation (34) un signal de coupure à vocation de sécurité.

11. Procédé selon la revendication 10,
dans lequel le palpage périodique est subdivisé en portions angulaires (62) imposées par une résolution angulaire, et dans lequel, dans chaque portion angulaire (62), on collecte un histogramme (110) dans une première fenêtre temporelle et on évalue l'histogramme (110) dans une seconde fenêtre temporelle successive.

12. Procédé selon la revendication 10 ou 11,
dans lequel on évalue plusieurs histogrammes (110) dans au moins deux canaux d'évaluation (32a, 32b).

13. Procédé selon l'une des revendications 10 à 12,
dans lequel on mémorise une étiquette temporelle pour chaque tronçon accumulé d'un signal de réception et on efface respectivement par roulement le signal de réception le plus ancien lors de la prise d'un autre signal de réception.

14. Procédé selon l'une des revendications 10 à 13,
dans lequel on accumule tout d'abord des histogrammes dans plusieurs mémoires d'histogrammes (32a, 32b) et on les regroupe ensuite dans une mémoire d'histogramme (32a, 32b).
